(19) Europäisches Patentamt
European Patent Office
Office européen des brevets

(11) EP 4 563 636 A1

(12) **EUROPEAN PATENT APPLICATION**
published in accordance with Art. 153(4) EPC

(43) Date of publication:
**04.06.2025 Bulletin 2025/23**

(21) Application number: **23850318.9**

(22) Date of filing: **24.07.2023**

(51) International Patent Classification (IPC):
***C08K 9/04*** *(2006.01)* ***C08K 3/013*** *(2018.01)*
***C08K 5/12*** *(2006.01)* ***C08K 5/09*** *(2006.01)*
***C08L 67/02*** *(2006.01)* ***C08L 67/00*** *(2006.01)*
***C08K 3/08*** *(2006.01)*

(52) Cooperative Patent Classification (CPC):
**C08K 3/013; C08K 3/08; C08K 5/09; C08K 5/12; C08K 9/04; C08L 67/00; C08L 67/02**

(86) International application number:
**PCT/KR2023/010696**

(87) International publication number:
**WO 2024/029811 (08.02.2024 Gazette 2024/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **02.08.2022 KR 20220096395**
**02.08.2022 KR 20220096396**
**05.07.2023 KR 20230087243**

(71) Applicant: **SK leaveo Co., Ltd.**
**Gyeonggi-do 16338 (KR)**

(72) Inventors:
- **LEE, Deuk-Young**
**Seoul 03142 (KR)**
- **CHOI, Yujin**
**Seoul 03142 (KR)**
- **KIM, Sangmin**
**Seoul 03142 (KR)**

(74) Representative: **Isarpatent**
**Patent- und Rechtsanwälte**
**Barth Hassa Peckmann & Partner mbB**
**Friedrichstraße 31**
**80801 München (DE)**

(54) **METHOD FOR PREPARING BIODEGRADABLE RESIN COMPOSITION, BIODEGRADABLE RESIN COMPOSITION PREPARED THEREBY, AND BIODEGRADABLE MOLDED PRODUCT COMPRISING SAME**

(57) The present invention provides a method for preparing a biodegradable resin composition, a biodegradable resin composition prepared thereby, and a biodegradable molded product, the method comprising the steps of: treating the surface of an inorganic filler with a surface treatment agent; and mixing the surface-treated inorganic filler and a biodegradable resin, wherein the surface treatment agent includes a flow improver, and the flow improver includes a phthalate-based compound.

【FIG. 1】

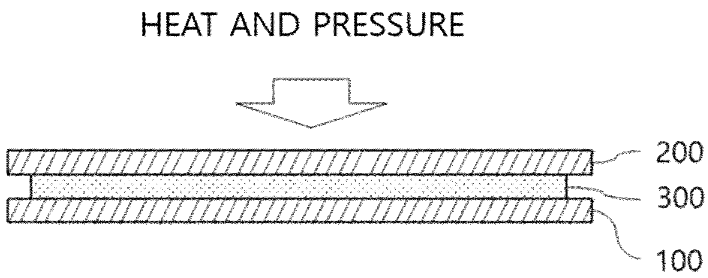


EP 4 563 636 A1

## Description

[Technical Field]

The present invention relates to a method of preparing a biodegradable resin composition, a biodegradable resin composition prepared by the method, and a biodegradable molded article including the biodegradable resin composition.

[Background Art]

Recently, as concerns about environmental problems have increased, solutions to the disposal problems of various household goods, especially disposable products, are required. Specifically, petroleum-based polymer materials are inexpensive and have excellent processability, so they are widely used to manufacture various products such as films, fibers, packaging materials, bottles, and containers. However, products made from the petroleum-based polymer materials emit harmful substances when incinerated at the end of their lifespan. In addition, depending on the types of products, it takes hundreds of years to completely decompose naturally.

To overcome these limitations of petroleum-based polymer materials, research is being actively conducted on biodegradable resins that decompose in a relatively short period. Polylactic acid (PLA), polybutylene adipate terephthalate (PBAT), and polybutylene succinate (PBS) are being introduced as biodegradable resins.

However, PLA lacks flexibility, and PBAT has poor mechanical properties, so the uses thereof are limited. To improve these problems, US Patent No. 9096758 used a biodegradable resin composition prepared by mixing PBAT with a small amount of inorganic filler. However, the biodegradable resin has limitations in replacing existing petroleum-based polymer materials due to its insufficient mechanical properties, flexibility and elongation.

[Disclosure]

[Technical Problem]

Therefore, the present invention has been made in view of the above problems, and it is one object of the present invention to provide a method of preparing a biodegradable resin composition which can improve the fluidity of an inorganic filler and, thus, can improve processability and mechanical properties; a biodegradable resin composition prepared by the method; a biodegradable molded article including the biodegradable resin composition.

[Technical Solution]

In accordance with an aspect of the present invention, the above and other objects can be accomplished by the provision of a method of preparing a biodegradable resin composition, the method comprising: surface-treating an inorganic filler with a surface treatment agent; and mixing the surface-treated inorganic filler with a biodegradable resin, wherein the surface treatment agent comprises a fluidity enhancer, wherein the fluidity enhancer comprises a phthalic acid ester-based compound.

In an embodiment of the present invention, the phthalic acid ester-based compound may be represented by Chemical Formula 1 below:

[Chemical Formula 1]

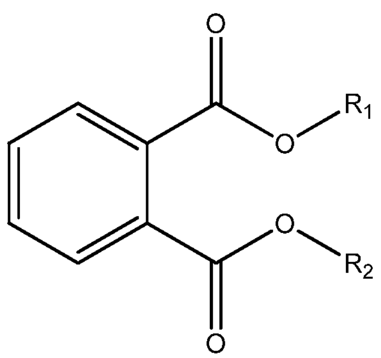

In Chemical Formula 1, $R_1$ and $R_2$ are each independently an alkyl group having 4 to 10 carbon atoms.

In an embodiment of the present invention, the surface treatment agent may further include an organic fatty acid.
In an embodiment of the present invention, the organic fatty acid may include stearic acid.
In an embodiment of the present invention, the surface-treating of the inorganic filler may include heat-treating the inorganic filler, and mixing the heat-treated inorganic filler with the surface treatment agent.
In an embodiment of the present invention, in the heat-treating of the inorganic filler, the heat treatment may be performed at 250 °C to 700°C for 5 minutes to 30 minutes.
In an embodiment of the present invention, in the surface-treating of the inorganic filler, the content of the fluidity enhancer may be greater than 0 part by weight and 1 part by weight or less based on 100 parts by weight of the inorganic filler.
In an embodiment of the present invention, in the surface-treating of the inorganic filler, the content of the surface treatment agent may be 0.5 parts by weight or more and 5 parts by weight or less based on 100 parts by weight of the inorganic filler.
In accordance with another aspect of the present invention, there is provided a biodegradable resin composition including a biodegradable resin, an inorganic filler, and a fluidity enhancer, wherein the fluidity enhancer includes a phthalic acid ester-based compound.
In an embodiment of the present invention, the biodegradable resin composition may further include an organic fatty acid.
In an embodiment of the present invention, the content of the fluidity enhancer may be greater than 0 wt % and 1 wt% or less based on a total weight of the biodegradable resin composition.
In an embodiment of the present invention, an inorganic content-weighted elongation at break may exceed 100 %, wherein the inorganic content-weighted elongation at break is obtained by multiplying a breaking elongation measured by Measurement Method 1 below by wt % of the inorganic filler based on a total weight of the biodegradable resin composition:

[Measurement Method 1]

1) The biodegradable resin composition is placed between a pair of flat stainless steel molds, compressed at 180° C under a pressure of 20 MPa, and molded, so that a biodegradable resin composition sheet having a thickness of 900 μm is manufactured.
2) The biodegradable resin composition sheet is cut to produce a sample having a rectangular planar shape with a width of 15 mm.
3) According to ASTM D882, a breaking elongation of a 50 mm part in length of the sample is measured.

In an embodiment of the present invention, a tensile strength of a 50 mm part in length of the sample may be 0.7 kgf/mm$^2$ to 2 kgf/mm$^2$.
In an embodiment of the present invention, an inorganic content-weighted tensile strength may be 0.3 kgf/mm$^2$ to 1.2 kgf/mm$^2$, wherein the inorganic content-weighted tensile strength is obtained by multiplying the tensile strength by wt % of the inorganic filler based on a total weight of the biodegradable resin composition.
In an embodiment of the present invention, an inorganic content-weighted melt index may be 0.05 g/10 min to 5 g/10 min, wherein the melt index is measured from the biodegradable resin composition at 190°C under a load of 2.16 kg according to ASTM D1238, and the inorganic content-weighted melt index is obtained by multiplying the melt index by multiplying wt % of the inorganic filler based on a total weight of the biodegradable resin composition.
In an embodiment of the present invention, the biodegradable resin composition may have a wet hardness reduction rate of 15 % or less measured by Measurement Method 2 below:

[Measurement Method 2]

1) A polyester block with a thickness of 2.5 mm is manufactured using the biodegradable resin composition.
2) An initial hardness of the polyester block, and a wet hardness of the polyester block after immersing in water at 30°C for 24 hours are measured.
3) The wet hardness reduction rate is obtained by dividing a difference between the initial hardness and the wet hardness by the initial hardness.

In an embodiment of the present invention, the biodegradable resin composition may include an oligomer having

a number average molecular weight of 400 g/mol to 1,300 g/mol, wherein a content of the oligomer is 1,000 ppm to 20,000 ppm based on a total weight of the biodegradable resin composition.

In accordance with yet another aspect of the present invention, there is provided a biodegradable resin composition, comprising: a biodegradable resin; an inorganic filler; and a fluidity enhancer, wherein the fluidity enhancer comprises a phthalic acid ester-based compound.

In an embodiment of the present invention, the biodegradable molded article may be a nonwoven fabric, a vacuum-formed sheet, a blown molded article, or an injection-molded article.

[Advantageous effects]

A method of preparing a biodegradable resin composition according to the present invention includes treating the surface of an inorganic filler with a surface treatment agent including a fluidity enhancer. Accordingly, even if a high content of the inorganic filler is contained in the biodegradable resin composition, flexibility and elongation can be increased and processability can be improved.

In addition, in the method of preparing the biodegradable resin composition according to the present invention, only the surface of an inorganic filler is treated with a surface treatment agent, and the fluidity enhancer includes a phthalic acid ester-based compound. Accordingly, even if the fluidity enhancer is used in a small amount, the fluidity of the inorganic filler can be effectively improved.

In addition, the biodegradable resin composition according to the present invention can have a wet hardness reduction rate of 15 % or less, i.e., high moisture resistance, it can maintain high mechanical properties even when exposed to water or even in a high-moisture environment.

In addition, as the biodegradable resin composition according to the present invention includes 1,000 ppm to 20,000 ppm of an oligomer having a number average molecular weight of 400 g/mol to 1,300 g/mol, the hydrophilicity and/or hydrophobicity of the biodegradable resin composition can be controlled. Accordingly, the biodegradable resin composition can have a hydrolysis degree and an appropriate biodegradability degree.

In addition, a biodegradable resin composition and a biodegradable molded article manufactured by the method can have improved processability and mechanical properties.

[Description of Drawings]

FIG. 1 schematically illustrates a process of measuring the breaking elongation, tensile strength and modulus of a biodegradable resin composition according to the present invention.

FIG. 2 schematically illustrates a biodegradable molded article according to the present invention.

[Best Mode]

Structural or functional descriptions of embodiments disclosed in the present specification or application are merely illustrated for the purpose of explaining embodiments according to the technical idea of the present invention, embodiments according to the technical idea of the present invention may be implemented in various forms other than the embodiments disclosed in the present specification or application, and it is not to be construed that the technical idea of the present invention is limited to the embodiments described in the present specification or application.

In the present specification or application, when a certain component is "included", this indicates that only the component is included or the component may further include another component unless there is no different disclosure. In addition, it should be understood that all numerical ranges representing physical property values, dimensions, etc. of components described in the present specification or application are modified by the term 'about' in all cases unless otherwise specified.

Hereinafter, a method of preparing a biodegradable resin composition according to the present invention, a biodegradable resin composition prepared by the method, and a biodegradable molded article including the biodegradable resin composition are described in detail.

<Method of preparing biodegradable resin composition>

A method of preparing the biodegradable resin composition according to the present invention includes a step of treating the surface of an inorganic filler with a surface treatment agent, and a step of mixing the surface-treated inorganic filler with a biodegradable resin, wherein the surface treatment agent includes a fluidity enhancer, wherein the fluidity enhancer includes a phthalic acid ester-based compound.

The preparation method includes a step of treating the surface of an inorganic filler with a surface treatment agent.

The inorganic filler may be at least one selected from the group consisting of calcium sulfate, barium sulfate, talc, talc powder, bentonite, kaolin, chalk powder, calcium carbonate, graphite, gypsum, electrically conductive carbon black, calcium chloride, iron oxide, aluminum oxide, potassium oxide, dolomite, silicon dioxide, wollastonite, titanium dioxide, silicate, mica, glass fiber, and mineral fiber.

The inorganic filler may include calcium carbonate ($CaCO_3$). In general, a molded article manufactured from a biodegradable resin composition may produce acid components during biodegradation. The acid components and the calcium carbonate may react to generate $CO_2$ and $H_2O$, so the biodegradation rate of the molded article into molecular units may be further increased. In addition, the calcium carbonate may neutralize the acid components, reducing environmental load and preventing acidification of the soil.

Preferably, the calcium carbonate may be heavy calcium carbonate obtained by mechanically crushing or classifying natural calcium carbonate containing $CaCO_3$ as a main component, such as limestone, chalk, marble, shells, and coral. The crushing process may be performed by a dry crushing method or a wet crushing method.

The content of the inorganic filler may be 30 wt% or more, 35 wt% or more, 40 wt% or more, 45 wt% or more, 50 wt% or more, 55 wt% or more, 60 wt% or more, 65 wt% or more, 70 wt% or more, 75 wt% or more, 80 wt% or more, 30 wt% or more to 90 wt% or less, 30 wt% or more to 85 wt% or less, 30 wt% or more to 80 wt% or less, 30 wt% or more to 75 wt% or less, 30 wt% or more to 70 wt% or less, 35 wt% or more to 85 wt% or less, 35 wt% or more to 80 wt% or less, 35 wt% or more to 75 wt% or less, 35 wt% or more to 70 wt% or less, 40 wt% or more to 85 wt% or less, 40 wt% or more to 80 wt% or less, 40 wt% or more to 75 wt% or less, 40 wt% or more to 70 wt% or less, 45 wt% or more to 85 wt% or less, 45 wt% or more to 80 wt% or less, 45 wt% or more to 75 wt% or less, or 45 wt% or more to 70 wt% or less based on the total weight of the biodegradable resin composition. When the range is satisfied, the production costs may be reduced, the biodegradability and hydrolysis resistance may be improved by increasing the biodegradation starting point, and the mechanical properties of a molded article may be improved by preventing the dispersion degradation of an inorganic filler. In addition, since the specific gravity of the biodegradable molded article does not increase significantly, it may be used in a wider range of products, and the mechanical properties of a product may be improved, ensuring product reliability.

The specific surface area of the inorganic filler may be 0.1 $m^2/g$ to 10.0 $m^2/g$, 0.1 $m^2/g$ to 9.0 $m^2/g$, 0.1 $m^2/g$ to 8.0 $m^2/g$, 0.1 $m^2/g$ to 7.0 $m^2/g$, 0.1 $m^2/g$ to 6.0 $m^2/g$, 0.1 $m^2/g$ to 5.0 $m^2/g$, 0.1 $m^2/g$ to 4.0 $m^2/g$, or 0.1 $m^2/g$ to 3.0 $m^2/g$. The specific surface area may be measured using a nitrogen gas adsorption method. When the range is satisfied, it may be easily dispersed in a biodegradable resin, so that the biodegradability of the biodegradable resin may be promoted and the processability thereof may be improved.

The inorganic filler may have an average particle diameter of 0.1 μm to 10.0 μm, 0.1 μm to 9.0 μm, 0.1 μm to 8.0 μm, 0.1 μm to 7.0 μm, 0.1 μm to 6.0 μm, 0.1 μm to 5.0 μm, 0.1 μm to 4.0 μm, 0.1 μm to 3.0 μm, 1.0 μm to 5.0 μm, 1.0 μm to 4.0 μm, or 1.0 μm to 3.0 μm. The average particle diameter may be calculated based on the measurement results of a specific surface area by an air permeation method using a specific surface area measuring device. When the range is satisfied, an increase in viscosity may be prevented when mixing the biodegradable resin and the inorganic filler, and particle size uniformity may be improved.

The inorganic filler may have a sphericity of 0.30 to 0.95, 0.30 to 0.93, 0.30 to 0.90, 0.50 to 0.95, 0.50 to 0.93, 0.50 to 0.90, 0.60 to 0.95, 0.60 to 0.93, or 0.60 to 0.90. When the range is satisfied, it may contain a large number of microscopic pores generated at the interface between the biodegradable resin and the inorganic filler, so that the biodegradability may be improved, and the strength and molding processability of a molded article may be increased.

The surface treatment agent includes a fluidity enhancer. In general, the inorganic filler may be used to improve the properties of the biodegradable resin composition. However, when the inorganic filler, which was a solid, was contained in a high content in the biodegradable resin composition, the mechanical properties such as tensile strength, breaking elongation, and modulus deteriorated, and the fluidity was greatly reduced, resulting in reduced processability.

Accordingly, the preparation method according to the present invention improves the fluidity of the inorganic filler by treating only the surface of the inorganic filler with the surface treatment agent containing the fluidity enhancer. Therefore, even if the inorganic filler is included in a high content in the biodegradable resin composition, mechanical properties such as tensile strength, breaking elongation, and modulus may be increased, and processability may be improved.

The content of the fluidity enhancer may be greater than 0 part by weight and 1 part by weight or less, greater than 0 part by weight and 0.9 parts by weight or less, greater than 0 part by weight and 0.8 parts by weight or less, greater than 0 part by weight and 0.7 parts by weight or less, greater than 0 part by weight and 0.6 parts by weight or less, or greater than 0 part by weight and 0.5 parts by weight or less based 100 parts by weight of the inorganic filler. When the range is satisfied, the fluidity of the inorganic filler may be effectively improved while using a reduced amount that is beyond environmental regulation content, thereby increasing flexibility and elongation and improving processability.

The fluidity enhancer includes a phthalic acid ester-based compound. The phthalic acid ester-based compound has excellent heat resistance due to low heating loss, and also has excellent compatibility with the inorganic filler.

Therefore, as the fluidity enhancer includes the phthalic acid ester-based compound, the fluidity of the inorganic filler may be effectively improved even when the fluidity enhancer is included in a small amount.

The phthalic acid ester-based compound may be represented by Chemical Formula 1 below:

[Chemical Formula 1]

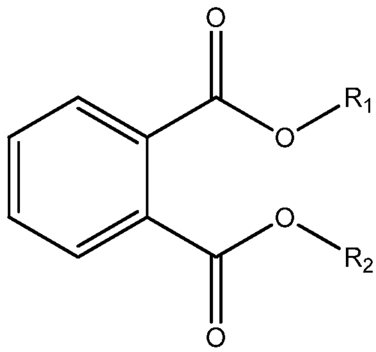

In Chemical Formula 1, $R_1$ and $R_2$ are each independently an alkyl group having 4 to 10 carbon atoms.

The weight average molecular weight of the phthalic acid ester-based compound may be 100 g/mol to 1,500 g/mol, 100 g/mol to 1,000 g/mol, 100 g/mol to 900 g/mol, 100 g/mol to 800 g/mol, 100 g/mol to 700 g/mol, 200 g/mol to 700 g/mol, 200 g/mol to 600 g/mol, or 250 g/mol to 600 g/mol. The weight average molecular weight may be measured as a relative value to a standard polystyrene (PS) sample by GPC using THF as an eluent. When the range is satisfied, the fluidity of the inorganic filler may be effectively improved.

For example, the compound represented by Chemical Formula 1 may be represented by Chemical Formulas 1-1 to 1-5 below. Preferably, the compound represented by Chemical Formula 1 may be represented by Chemical Formula 1-1 below:

[Chemical Formula 1-1]

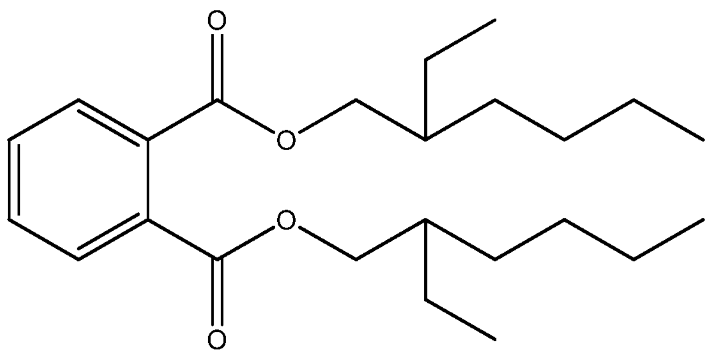

[Chemical Formula 1-2]

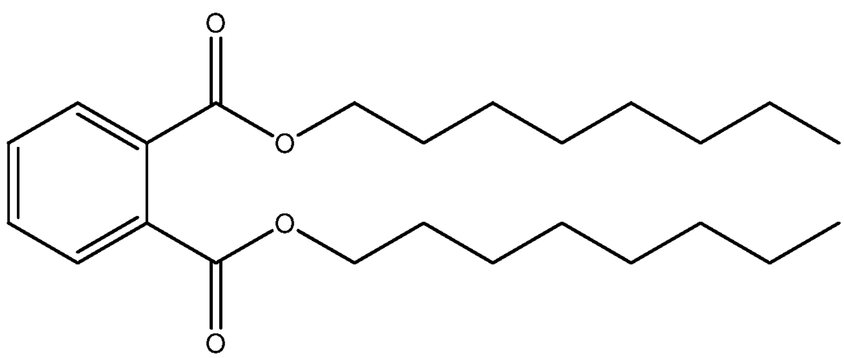

[Chemical Formula 1-3]

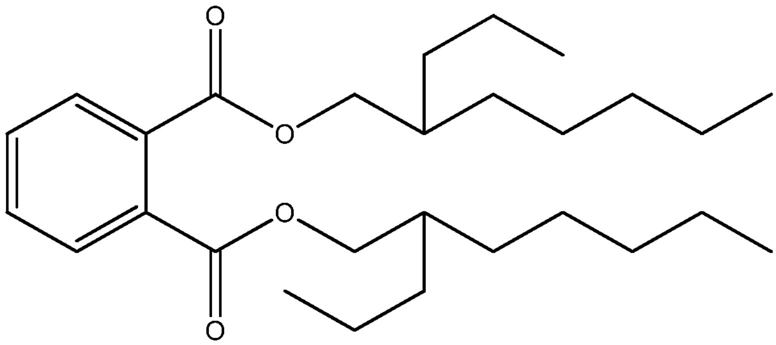

[Chemical Formula 1-4]

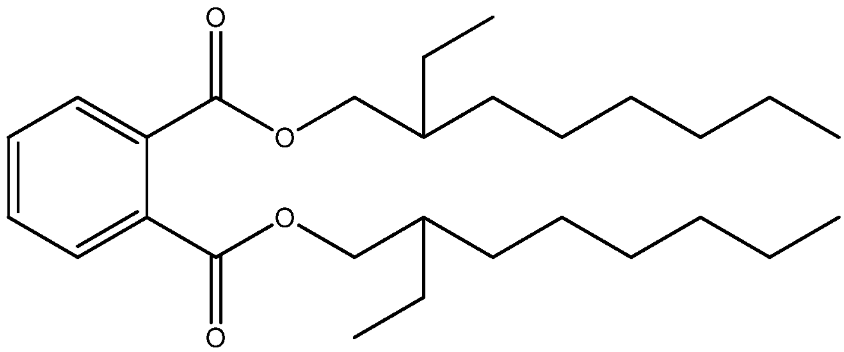

[Chemical Formula 1-5]

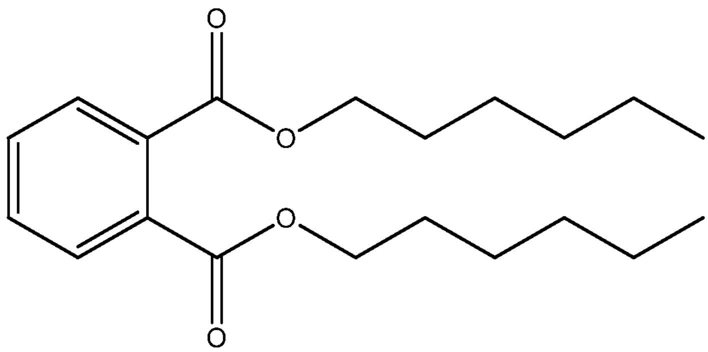

The surface treatment agent may further include an organic fatty acid.

The organic fatty acid may be one or more selected from the group consisting of fatty acids such as oleic acid, lauric acid, myristic acid, isotridecyl myristic acid, palmitic acid, behenic acid, stearic acid, and isostearic acid; amides and bisamides of the fatty acids; higher alcohols such as stearyl alcohol or branched alcohols; a metal soap-based lubricant such as barium stearate, calcium stearate, aluminum stearate, zinc stearate, magnesium stearate, or a complex thereof; $C_{16}$ or higher liquid paraffin, microcrystalline wax, natural paraffin, synthetic paraffin, polyolefin wax and its partial oxide, or aliphatic hydrocarbon lubricants such as fluorides and chlorides; oils such as silicon oil, soybean oil, palm oil, palm kernel oil, linseed oil, rapeseed oil, cottonseed oil, tung oil, castor oil, beef tallow, squalane, lanolin, and hydrogenated oils; carboxylic acid salts such as N-acyl amino acid salts, alkyl ether carboxylic acid salts, and acylated peptides; sulfonates such as alkyl sulfonates, alkyl benzene and alkyl naphthalene sulfonates, sulfone succinates, α-olefin sulfonates, and N-acyl sulfonates; sulfuric acid ester salts such as sulfated oil, alkyl sulfate, alkyl ether sulfate, alkyl allyl ether sulfate, and alkyl amide sulfate; phosphoric acid ester salts such as alkyl phosphates, alkyl ether phosphates, and alkyl allyl ether phosphates, such as trimethyl phosphate, triethyl phosphate, and triphenyl phosphate; cationic surfactants such as

aliphatic amine salts, aliphatic quaternary ammonium salts, benzalkonium salts, benzethonium chloride, pyridinium salts, and imidazolinium salts; amphoteric surfactants such as carboxy beta-type, amino carbonate, imidazolinium betaine, and lecithin; nonionic surfactants such as polyoxyethylene lanolin derivatives, ethylene oxide derivatives of alkylphenol formalin condensates, polyoxyethylene polyoxypropylene block polymers, fatty acid alkanolamides, polyoxyethylene fatty acid esteramides, polyoxyethylene alkylamines, and alkylamine oxides; and fluorine-based surfactants.

Considering compatibility with the fluidity enhancer and reactivity with the biodegradable resin, it is desirable that the organic fatty acid includes stearic acid.

The weight average molecular weight of the organic fatty acid may be 50 g/mol to 1,000 g/mol, 50 g/mol to 900 g/mol, 100 g/mol to 900 g/mol, 100 g/mol to 800 g/mol, 100 g/mol to 700 g/mol, 100 g/mol to 600 g/mol, 100 g/mol to 500 g/mol, or 150 g/mol to 500 g/mol. The weight average molecular weight may be measured as a relative value to a standard polystyrene (PS) sample by GPC using THF as an eluent. When the range is satisfied, the phenomenon of the surface treatment agent being released may be suppressed.

The content of the surface treatment agent may be 0.5 parts by weight or more and 5 parts by weight or less, 0.5 parts by weight or more and 4 parts by weight or less, 0.5 parts by weight or more and 3 parts by weight or less, 0.5 parts by weight or more and 2.5 parts by weight or less, 0.5 parts by weight or more and 2 parts by weight or less, 0.7 parts by weight or more and 2 parts by weight or less, or 0.7 parts by weight or more and 1.5 parts by weight or less based 100 parts by weight of the inorganic filler. When the range is satisfied, the phenomenon of the surface treatment agent being released may be suppressed, and the fluidity of the inorganic filler may be effectively improved.

The step of surface-treating the inorganic filler may include a step of heat-treating the inorganic filler; and a step of mixing the heat-treated inorganic filler with the surface treatment agent.

In the step of heat-treating the inorganic filler, the inorganic filler may be heat-treated at about 200 °C to about 800 °C, about 250 °C to about 800 °C, or about 250 °C to about 750 °C, or about 250 °C to about 700 °C by a heating device selected from a kiln, an electric furnace and a microwave. The heat treatment time may be about 3 minutes to about 60 minutes, about 3 minutes to about 50 minutes, about 5 minutes to about 50 minutes, or about 5 minutes to about 30 minutes. Preferably, in the step of heat-treating the inorganic filler, The heat treatment may be carried out at 250 °C to 700°C for 5 minutes to 30 minutes. When the range is satisfied, moisture in the inorganic filler may be easily removed, the surface treatment agent may be easily combined with the surface of the inorganic filler, and the agglomeration of the inorganic filler may be minimized.

Before the step of heat-treating the inorganic filler, the inorganic filler may be manufactured into powder form by a crushing process. Next, the inorganic filler powder may be classified, so that an inorganic filler of a desired particle size may be obtained.

In the step of mixing the heat-treated inorganic filler with the surface treatment agent, the surface treatment agent may be added to the inorganic filler heat-treated in the step of heat-treating the inorganic filler, and in a state where the temperature of the inorganic filler is increased, the inorganic filler may be stirred so that the surface treatment agent may be combined with the surface of the inorganic filler.

The process temperature in the surface treatment process may be about 50 °C to about 150 °C, about 70 °C to about 140 °C, about 70 °C to about 135 °C, or about 70 °C to about 130 °C. Preferably, the process temperature in the surface treatment process may be from the melting point of the surface treatment agent to the melting point + 60 °C of the surface treatment agent.

The surface treatment process time may be about 1 minute to about 60 minutes, about 5 minutes to about 60 minutes, about 5 minutes to about 50 minutes, about 5 minutes to about 40 minutes, or about 5 minutes to about 20 minutes.

Next, the surface-treated inorganic filler may be subjected to an additional process of crushing and classifying aggregates agglomerated in the surface treatment process.

The surface-treated inorganic filler may be partially oxidized. The surface-treated inorganic filler may partially include calcium oxide (CaO). A proportion of the calcium oxide may be 5 vol% or less, 4 vol% or less, 3 vol% or less, 2 vol% or less, 1 vol% or less, 0.01 vol% or more to 5 vol% or less, 0.01 vol% or more to 4 vol% or less, 0.01 vol% or more to 3 vol% or less, 0.01 vol% or more to 2 vol% or less, or 0.01 vol% or more to 1 vol% or less based on 100 vol% of the surface-treated inorganic filler particles. The proportion of the calcium oxide may be measured by EDTA (Ethylene diamine tetra acetic acid) titration method according to JIS R 9011. When the range is satisfied, the uniformity of the surface of the inorganic filler may be improved, and the phenomenon of the surface treatment agent being eluted from the surface of the inorganic filler may be minimized, so that the hydrolysis resistance may be improved.

The preparation method includes a step of mixing the surface-treated inorganic filler with a biodegradable resin.

The mixing may be appropriately set according to a molding method. For example, the biodegradable resin and the surface-treated inorganic filler may be kneaded and melted before being fed into a molding machine from a hopper, or the biodegradable resin and the surface-treated inorganic filler may be kneaded and melted while molding as an integral part of the molding machine. It is desirable to knead by applying high shear stress while uniformly dispersing the surface-treated inorganic filler in the biodegradable resin. Specifically, it is desirable to knead with a kneader reactor, an extrusion

molding machine equipped with a single screw, or a twin-screw kneading machine. As needed, a plasticizer may be additionally added.

The step of mixing the surface-treated inorganic filler with a biodegradable resin may include one or more mixing stages. One mixing stage may be a single mixing stage of preparing a biodegradable resin composition including 60 to 80 wt%, 61 to 80 wt%, 62 to 80 wt%, 63 to 80 wt%, 64 to 80 wt%, 65 to 80 wt%, 60 to 75 wt%, 61 to 75 wt%, 62 to 75 wt%, 63 to 75 wt%, 64 to 75 wt%, 65 to 75 wt%, or 65 to 72 wt% of the surface-treated inorganic filler based on the total weight of the biodegradable resin composition. Two mixing stages may include a first mixing step of preparing a biodegradable resin composition including 60 to 80 wt%, 61 to 80 wt%, 62 to 80 wt%, 63 to 80 wt%, 64 to 80 wt%, 65 to 80 wt%, 60 to 75 wt%, 61 to 75 wt%, 62 to 75 wt%, 63 to 75 wt%, 64 to 75 wt%, 65 to 75 wt%, or 65 to 72 wt% of the surface-treated inorganic filler based on the total weight of the biodegradable resin composition; and a second mixing stage of preparing a biodegradable resin composition including 30 to 85 wt%, 30 to 80 wt%, 30 to 75 wt%, 30 to 70 wt%, 35 to 85 wt%, 35 to 80 wt%, 35 to 75 wt%, 35 to 70 wt%, 40 to 85 wt%, 40 to 80 wt%, 40 to 75 wt%, 40 to 70 wt%, 45 to 85 wt%, 45 to 80 wt%, 45 to 75 wt%, 45 to 70 wt%, 50 to 85 wt%, 50 to 80 wt%, 50 to 75 wt%, or 50 to 70 wt% of the surface-treated inorganic filler based on the total weight of the biodegradable resin composition.

The one or more mixing stages may be a tandem continuous process. The temperature of the mixing stages may be 150 °C to 190 °C, 150 °C to 180 °C, or 160 °C to 180 °C. When the range is satisfied, an increase in torque during the mixing stages may be reduced, and the thermal decomposition of the mixed biodegradable resin composition may be reduced.

In the step of mixing the surface-treated inorganic filler with a biodegradable resin, a hydrolysis inhibitor may be added. The hydrolysis inhibitor may be added in an amount of 0.1 wt% to 5.0 wt%, 0.1 wt% to 4.0 wt%, 0.1 wt% to 3.0 wt%, 0.1 wt% to 2.0 wt%, 0.1 wt% to 1.5 wt%, or 0.1 wt% to 1.0 wt% based on the total weight of the biodegradable resin composition. The hydrolysis inhibitor may include a carbodiimide-based compound. The carbodiimide-based compound may react with moisture and acid to convert into a urea structure, thereby reducing the reactivity among moisture, acid, and an ester group included in a biodegradable resin, and thus reducing the phenomenon of the biodegradable resin being hydrolyzed by moisture and acid. In conclusion, the hydrolysis resistance of the biodegradable resin composition may be improved.

After the step of mixing the surface-treated inorganic filler with a biodegradable resin, a step of manufacturing pellets from the biodegradable resin composition may be included.

In the step of manufacturing the pellets, the biodegradable resin composition is fed into an extrusion molding machine equipped with a single screw or an extrusion molding machine equipped with a twin screw to extrude at 150 °C to 180 °C, cut with a hot-cut pellet cutter, and cooled at 30 °C or lower, 25 °C or lower, 5 °C to 50 °C, 10 °C to 30°C, 15 °C to 25°C, or 20 °C to 25 °C, thereby manufacturing pellets. In the cutting step, pellet cutting machines used in the art may be used without particular limitations, and the shape of the manufactured pellets is not particularly limited.

After the step of manufacturing the pellets, a step of drying and melt-extruding the pellet may be included.

The drying may be performed in a temperature range of 60 °C to 100 °C, 65 °C to 95 °C, 70 °C to 90 °C, or 75 °C to 85 °C for 2 hours to 12 hours, 3 hours to 12 hours, or 4 hours to 10 hours. When these conditions are satisfied, the appearance, mechanical properties and chemical characteristics of a biodegradable molded article to be manufactured may be further improved.

The melt-extruding may be performed at 270 °C or lower, 265 °C or lower, 260 °C or lower, 255 °C or lower, 130 °C to 270 °C, 130 °C to 250 °C, 140 °C to 230 °C, 150 °C to 200 °C, or 150 °C to 180 °C. The melt-extruding may be performed by a blown film process or a press process without particular limitation. During the melt-extruding, torque may be 100 N·m to 300 N·m, or 150 N·m to 250 N·m.

<Biodegradable resin composition>

A biodegradable resin composition according to the present invention includes a biodegradable resin, an inorganic filler, and a fluidity enhancer, wherein the fluidity enhancer includes a phthalic acid ester-based compound.

The inorganic filler and the fluidity enhancer may be the same as the inorganic filler and fluidity enhancer described above.

The biodegradable resin composition may further include an organic fatty acid. The organic fatty acid may be the same as the organic fatty acid described above.

The content of the fluidity enhancer may be greater than 0 wt % and 1 wt % or less, greater than to 0 wt % and 0.9 wt % or less, greater than 0 wt % and 0.8 wt % or less, greater than 0 wt % and 0.7 wt % or less, greater than 0 wt % and 0.6 wt % or less, or greater than 0 wt % and 0.5 wt % or less based on a total weight of the biodegradable resin composition. More specifically, the content of the fluidity enhancer may be 0.1 ppm to 100 ppm, 0.5 ppm to 100 ppm, 0.5 ppm to 50 ppm, 0.5 ppm to 20 ppm, or 0.5 ppm to 18 ppm based on the total weight of the biodegradable resin composition. When the range is satisfied, the fluidity of the inorganic filler may be effectively improved while using a reduced amount that is beyond environmental regulation content, thereby increasing flexibility and elongation and improving processability.

The phthalic acid ester-based compound may be represented by Chemical Formula 1 below and may be the same as the phthalic acid ester-based compound described above:

[Chemical Formula 1]

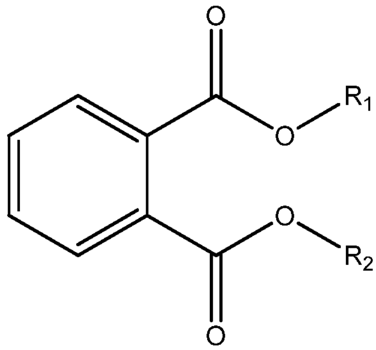

In Chemical Formula 1, $R_1$ and $R_2$ are each independently an alkyl group having 4 to 10 carbon atoms.

The weight average molecular weight of the phthalic acid ester-based compound may be 100 g/mol to 1,500 g/mol, 100 g/mol to 1,000 g/mol, 100 g/mol to 900 g/mol, 100 g/mol to 800 g/mol, 100 g/mol to 700 g/mol, 200 g/mol to 700 g/mol, 200 g/mol to 600 g/mol, or 250 g/mol to 600 g/mol. The weight average molecular weight may be measured as a relative value to a standard polystyrene (PS) sample by GPC using THF as an eluent. When the range is satisfied, the fluidity of the inorganic filler may be effectively improved.

The biodegradable resin may include a diol ingredient and a dicarboxylic acid ingredient. Specifically, the biodegradable resin may include a first repeat unit and a second repeat unit. The first repeat unit may include a diol ingredient and an aromatic dicarboxylic acid ingredient, and the second repeat unit may include a diol ingredient and an aliphatic dicarboxylic acid ingredient.

The diol ingredient may include 1,4-butanediol or a derivative thereof. Based on the total mol number of the diol ingredient, the diol ingredient may include 1,4-butanediol or a derivative thereof in an amount of 95 mol% or more, 97 mol% or more, 98 mol% or more, 99 mol% or more, or 100 mol%. The diol ingredient may improve biodegradability, flexibility, and strength by including 1,4-butanediol or a derivative thereof. When the diol ingredient consists only of 1,4-butanediol, the improvement in biodegradability and strength may be maximized.

The diol ingredient may further include a second diol that is different from the first diol, which is 1,4-butanediol or a derivative thereof. The second diol may include one or more selected from the group consisting of propanediol, hexanediol, cyclohexanedimethanol, and ethylene glycol. Specifically, the second diol may include one or more selected from the group consisting of 1,3-propanediol, 1,2-propanediol, 1,2-hexanediol, 1,3-hexanediol, 1,4-hexanediol, 1,6-hexanediol, 2,3-hexanediol, 2,4-hexanediol, 2,5-hexanediol, 2,6-hexanediol, 3,4-hexanediol, 1,2-cyclohexanedimethanol, 1,3-cyclohexanedimethanol, 1,4-cyclohexanedimethanol, and ethylene glycol. Based on the total mol number of the diol ingredient, the diol ingredient may include the second diol in an amount of 5 mol% or less, 3 mol% or less, 2 mol% or less, or 1 mol% or less.

The aromatic dicarboxylic acid ingredient may include one or more selected from the group consisting of terephthalic acid, dimethyl terephthalic acid, and derivatives thereof. Specifically, the aromatic dicarboxylic acid ingredient may be terephthalic acid or dimethyl terephthalic acid. Based on a total mol number of the dicarboxylic acid ingredient, the dicarboxylic acid ingredient may include the aromatic dicarboxylic acid ingredient in an amount of 15 mol% or more, 30 mol% or more, 45 mol% or more, 50 mol% or more, or 75 mol% or more, as a specific example, 30 mol% to 90 mol%, 35 mol% to 80 mol%, 40 mol% to 75 mol%, 45 mol% to 65 mol%, or 45 mol% to 55 mol%.

The aliphatic dicarboxylic acid ingredient may include one or more selected from the group consisting of adipic acid, succinic acid, and derivatives thereof. Specifically, the aliphatic dicarboxylic acid ingredient may be adipic acid or succinic acid. Based on a total mol number of the dicarboxylic acid ingredient, the dicarboxylic acid ingredient may include the aliphatic dicarboxylic acid ingredient in an amount of 15 mol% or more, 30 mol% or more, 45 mol% or more, 50 mol% or more, or 75 mol% or more, as a specific example, 30 mol% to 90 mol%, 35 mol% to 80 mol%, 40 mol% to 75 mol%, 45 mol% to 65 mol%, or 45 mol% to 55 mol%.

The molar ratio of the aromatic dicarboxylic acid ingredient to the aliphatic dicarboxylic acid ingredient may be 0.5 to 1.5:1, 0.6 to 1.5:1, 0.6 to 1.4:1, 0.7 to 1.4:1, 0.7 to 1.3:1, or 0.8 to 1.2:1.

The molar ratio of the diol ingredient to the dicarboxylic acid ingredient may be 0.5 to 2:1, 0.5 to 1.9:1, 0.5 to 1.8:1, 0.5 to 1.7:1, 0.6 to 1.7:1, 0.6 to 1.6:1, 0.7 to 1.5:1, or 0.9 to 1.2:1. When the range is satisfied, the biodegradability, strength, and processability of the biodegradable resin composition may be improved without discoloration such as yellowing.

The biodegradable resin may include polybutylene adipate terephthalate (PBAT), in which the first repeat unit may include a diol ingredient and an aromatic dicarboxylic acid ingredient and the second repeat unit may include a diol ingredient and an aliphatic dicarboxylic acid ingredient.

Specifically, the polybutylene adipate terephthalate may include a unit represented by Chemical Formula 2 below:

[Chemical Formula 2]

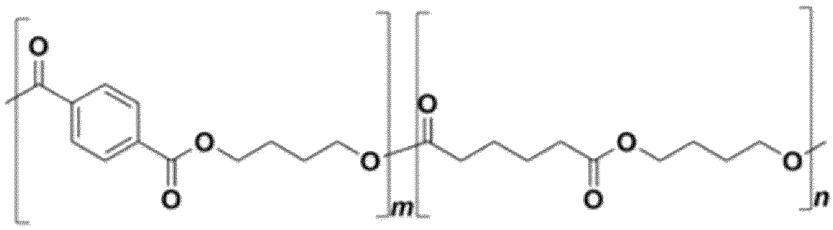

In Chemical Formula 2, m may be 1 to 20, and n may be 1 to 20.

The biodegradable resin composition may include a heterogeneous biodegradable resin in addition to the polybutylene adipate terephthalate. For example, the heterogeneous biodegradable resin may include one or more selected from the group consisting of polybutylene azelate terephthalate (PBAzT), polybutylene sebacate terephthalate (PBSeT), polybutylene succinate terephthalate (PBST), polyhydroxyalkanoate (PHA), and polylactic acid (PLA). The heterogeneous biodegradable resin may complement the mechanical properties of the polybutylene adipate terephthalate.

The polylactic acid may be a polylactic acid that has stereocomplex crystals and a high melting point. In addition, the polylactic acid may be formed by solution mixing or melt mixing of poly L-lactic acid and poly D-lactic acid.

Specifically, the polylactic acid may include a unit represented by Chemical Formula 3 below:

[Chemical Formula 3]

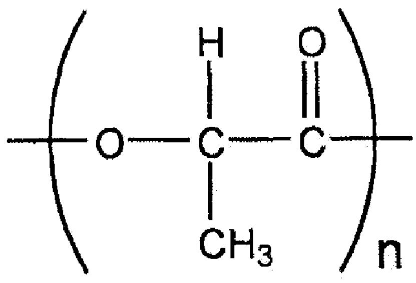

The polylactic acid may be a polymer including an L-lactic acid unit and/or a D-lactic acid unit. The polylactic acid may include poly L-lactic acid and/or poly D-lactic acid.

The poly L-lactic acid may be a polymer including primarily the L-lactic acid unit. The poly L-lactic acid may include the L-lactic acid unit in an amount of about 90 mol% to about 100 mol%, about 91 mol% to about 100 mol%, about 92 mol% to about 100 mol%, about 93 mol% to about 100 mol%, about 94 mol% to about 100 mol%, about 95 mol% to about 100 mol%, about 96 mol% to about 100 mol%, or about 97mol% to about 100 mol%. The poly L-lactic acid may include the D-lactic acid unit and/or a unit other than lactic acid. The poly L-lactic acid may include the D-lactic acid unit and/or a unit other than lactic acid in an amount of about 0 mol% to about 10 mol%, about 0 mol% to about 9 mol%, about 0 mol% to about 8 mol%, about 0 mol% to about 7 mol%, about 0 mol% to about 6 mol%, about 0 mol% to about 5 mol%, or about 0 mol% to about 3 mol%.

The poly D-lactic acid may be a polymer including primarily the D-lactic acid unit. The poly D-lactic acid may include the D-lactic acid unit in an amount of about 90 mol% to about 100 mol%, about 91 mol% to about 100 mol%, about 92 mol% to about 100 mol%, about 93 mol% to about 100 mol%, about 94 mol% to about 100 mol%, about 95 mol% to about 100 mol%, or about 97 mol% to about 100 mol%. The poly D-lactic acid may include the L-lactic acid unit and/or a unit other than lactic acid. The poly D-lactic acid may include the L-lactic acid unit and/or a unit other than lactic acid in an amount of about 0 mol% to about 10 mol%, about 0 mol% to about 9 mol%, about 0 mol% to about 8 mol%, about 0 mol% to about 7 mol%, about 0 mol% to about 6 mol%, about 0 mol% to about 5 mol%, or about 0 mol% to about 3 mol%.

The unit other than lactic acid may include units derived from dicarboxylic acids, polyhydric alcohols, hydroxycarboxylic acids, and lactones, which have a functional group capable of forming two or more ester bonds, and units derived from various polyesters, various polyethers, and various polycarbonates, which consist of these various components.

For example, the dicarboxylic acids may include succinic acid, adipic acid, azela phosphoric acid, sebacic acid, terephthalic acid, isophthalic acid, and the like. The polyhydric alcohols may include aliphatic polyhydric alcohols, such as ethylene glycol, propylene glycol, butanediol, pentanediol, hexanediol, octanediol, glycerin, sorbitan, neopentyl glycol, diethylene glycol, triethylene glycol, polyethylene glycol, and polypropylene glycol, and aromatic polyhydric alcohols obtained by adding ethylene oxide to bisphenol.

The hydroxycarboxylic acids may include glycolic acid, hydroxybutyric acid, and the like. For example, the lactones may include glycolide, ε-caprolactone glycolide, ε-caprolactone, β-propiolactone, δ-butyrolactone, β- or γ-butyrolactone, pivalolactone, δ-valerolactone, and the like.

The polylactic acid may be commercially available from Biomer Inc. under the name BIOMER™ L9000. In addition, the polylactic acid may be commercially available from Natureworks LLC (NATUREWORKS®) or Mitsui Chemical (LACEA™). In addition, the polylactic acid may be described in U.S. Patent Nos. 4,797,468; 5,470,944; 5,770,682; 5,821,327; 5,880,254; and 6,326,458, the entirety of which is incorporated in the present invention by reference for all purposes.

The polyhydroxyalkanoate may include a unit represented by Chemical Formula 4 below:

[Chemical Formula 4]

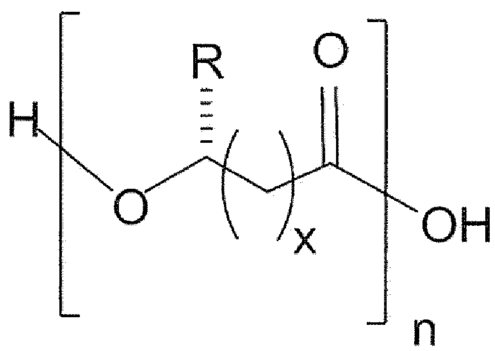

In Chemical Formula 4, R may be independently selected from the group consisting of a hydrogen atom, a hydrocarbon group, a hetero atom, and combinations thereof, n may be the number of repeat units from 1 to 35,000, and x may be an integer from 1 to 5.

The polyhydroxyalkanoate may be a homopolymer or copolymer consisting of at least one moiety selected from the group consisting of 3-hydroxypropionate, 3-hydroxybutyrate, 3-hydroxyvalerate, 3-hydroxyhexanoate, 3-hydroxyheptanoate, 3-hydroxyoctanoate, 3-hydroxynonanoate, 3-hydroxydecanoate, 3-hydroxyundecanoate, 3-hydroxydodecanoate, and combinations thereof. In addition, the at least one moiety may have the same or different numbers of repeat units.

The polyhydroxyalkanoate may be a copolymer containing a 3-hydroxybutyrate unit and a 3-hydroxyhexanoate unit as main constituent units.

The polyhydroxyalkanoate may include 80 mol% or more of the 3-hydroxybutyrate unit as a component. The polyhydroxyalkanoate may include the 3-hydroxybutyrate unit in an amount of about 85 mol% or more.

The polyhydroxyalkanoate may be a poly(3-hydroxybutyrate-co-3-hydroxyhexanoate) copolymer resin or a poly(3-hydroxybutyrate-co-3-hydroxyvalerate-co-3-hydroxyhexanoate) copolymer resin.

For example, the polyhydroxyalkanoate may be produced using a microorganism such as Alcaligenes eutrophus AC 32 (International deposit based on the Budapest Treaty, International depositary authority: Independent Administrative Corporation Industrial Technology Research Institute Patent Biological Deposit Center (Central No. 6, 1-1, Tsukuba-shi, Ibaraki Prefecture, Japan), Original deposit date: August 12, 1996, Transferred on August 7, 1997, Deposit number: FERM BP-6038, Transferred from original deposit FERM P-15786, J. Bacteriol., 179, 4821 (1997)) created by introducing an Aeromonas caviae-derived PHA synthesizing enzyme gene into Alcaligenes eutrophus.

The polyhydroxyalkanoate may be available commercially. The commercially available products of the polyhydroxyalkanoate may include 「NODAX」 of Danimer Co., 「ENMAT」 of Tianan Biopolymer Co., 「PHACT」 of CJ Co., and 「Aonilex (registered trademark) X131N」, 「Aonilex (registered trademark) X131A」, Aonilex (registered trademark) 151A」, 「Aonilex (registered trademark) 151C」, 「PHBH (registered trademark) X331N」, 「PHBH (registered trademark) X131A」,

「PHBH (registered trademark) 151A」, and 「PHBH (registered trademark) 151C」 of Kaneka Co.

Based on the total weight of the biodegradable resin composition, the biodegradable resin may be included in an amount of less than 90 wt%, less than 89 wt%, less than 88 wt%, less than 87 wt%, less than 86 wt%, less than 85 wt%, less than 80 wt%, less than 70 wt%, 10 wt% or more and less than 85 wt%, 10 wt% or more and less than 80 wt%, 10 wt% or more and less than 70 wt%, 20 wt% or more and less than 70 wt%, 25 wt% or more and less than 70 wt%, 28.8 wt% or more and less than 70 wt%, or 28.8 wt% or more and 49.8 wt% or less. When the range is satisfied, the biodegradability degree is excellent, and hydrolysis resistance may be improved without deterioration in mechanical properties.

The biodegradable resin composition may further include a reinforcing agent. The reinforcing agent may be a fiber derived from biomass. The reinforcing agent may include nanocellulose. The nanocellulose may be natural nanocellulose in the form of a gel or dry powder. The dispersion stability, strength, and processability of a biodegradable resin containing the nanocellulose may be improved.

The nanocellulose may have a diameter of 1 nm to 100 nm, 1 nm to 95 nm, 5 nm to 90 nm, 10 nm to 80 nm, 5 nm to 60 nm, or 15 nm to 60 nm. The nanocellulose may have a length of 5 nm to 5 μm, 5 nm to 1 μm, 10 nm to 700 nm, 20 nm to 500 nm, 60 nm to 300 nm, 80 nm to 200 nm, or 100 nm to 250 nm. When the ranges are satisfied, the mechanical strength of the biodegradable resin composition may be further improved.

The nanocellulose may be in the form of dry powder or gel having aggregated secondary particles rather than single particles, and the size of the secondary particles may be 1 μm to 50 μm, 2 μm to 45 μm, or 5 μm to 50 μm. The nanocellulose may be in the form of freeze-dried powder to reduce the volume thereof for easy storage and transportation.

The nanocellulose may have an average particle diameter of 200 nm or less, 190 nm or less, or 185 nm or less. The particle diameter deviation may be 20 % or less, 18 % or less, or 16 % or less. When the range is satisfied, the dispersibility and durability of the nanocellulose may be improved.

The nanocellulose may function as a crystal nucleating agent that improves the crystallization rate of the biodegradable resin composition and increases the crystallization temperature of the biodegradable resin composition. The nanocellulose may include one or more selected from the group consisting of cellulose nanocrystals, cellulose nanofibers, and micro fibrillated cellulose. In terms of strength and thermal properties, the cellulose nanocrystals or the cellulose nanofibers are preferable.

The nanocellulose may perform UV-resistant function and may impart adequate UV-resistant properties, biodegradation rate, and hydrolysis rate to the biodegradable resin. The nanocellulose may include one or more selected from the group consisting of hydroxymethyl cellulose, hydroxyethyl cellulose, hydroxypropyl cellulose, hydroxypropyl methyl cellulose, cellulose acetate, methyl cellulose, ethyl cellulose, propyl cellulose, butyl cellulose, pentyl cellulose, hexyl cellulose, and cyclohexyl cellulose.

The nanocellulose may be pretreated by a bead mill or by ultrasonic waves. The nanocellulose may be water-dispersed nanocellulose pretreated with a bead mill or pretreated with ultrasonic waves.

The nanocellulose may be obtained by dispersing cellulose nanocrystals in the form of dry powder or gel with a particle diameter of 1 μm to 50 μm in water and then pre-treating the cellulose nanocrystals with a bead mill or ultrasonic waves. In this case, the number of nanocellulose particles may increase, thereby improving dispersibility.

Based on a total weight of the nanocellulose, the nanocellulose may be pre-treated with 0.01 to 10 wt%, 0.05 to 8 wt%, 0.1 to 8 wt%, 0.5 to 6 wt%, or 0.7 to 6 wt% of a silane coupling agent. When the range is satisfied, interfacial adhesion, dispersibility, and compatibility may be maximized. Thus, the mechanical properties, durability, and hydrolysis resistance of a biodegradable resin composition including the nanocellulose may be further improved.

The biodegradable resin may include the nanocellulose in a weight of 0.01 to 3 wt%, 0.01 to 2.5 wt%, 0.05 to 2 wt%, 0.07 to 1.8 wt%, 0.1 to 1.2 wt%, 0.1 to 1 wt%, or 0.15 to 0.7 wt% based on the total weight of the biodegradable resin. When the range is satisfied, the biodegradability and mechanical strength of the biodegradable resin composition may be further improved.

The biodegradable resin composition may include an oligomer. The oligomer may have a weight average molecular weight of about 400 g/mol to about 1,300 g/mol. Based on the weight of the biodegradable resin, the oligomer may be included in an amount of about 3,000 ppm to about 30,000 ppm, about 5,000 ppm to about 20,000 ppm, or about 5,000 ppm to about 15,000 ppm in the biodegradable resin composition. The oligomer may be a reaction product of at least two of the diol, the aromatic dicarboxylic acid, and the aliphatic dicarboxylic acid. The oligomer may be a reaction product of 1,4-butanediol, terephthalic acid, and adipic acid.

The biodegradable resin composition may include a plasticizer. The plasticizer may impart processability or flexibility to a molded article manufactured using the biodegradable resin composition. The plasticizer may be glycerol, an acrylate, glycerin, glycerol monostearate (GMS), sorbitol, or a mixture thereof. Based on the total weight of the biodegradable resin composition, the plasticizer may be included in an amount of less than 2.0 wt%, 1.8 wt% or less, 1.6 wt% or less, 1.4 wt% or less, 1.2 wt% or less, or 1.0 wt% or less. When the range is satisfied, a molded article manufactured from the biodegradable resin composition may be provided with flexibility, and may maintain a certain degree of hydrolysis resistance over a typical period of use by a user.

The biodegradable resin composition may include an antioxidant. The antioxidant may include one or more

selected from the group consisting of a phosphorus-based antioxidant, a phenol-based antioxidant, and a pentaerythritol-based antioxidant.

The phosphorus-based antioxidant may include one or more selected from the group consisting of triesters of phosphorous acids such as triphenyl phosphite, trisnonylphenyl phosphite, and tris(2,4-di-t-butylphenyl)phosphite, diesters, monoesters, trimethyl phosphate, triethyl phosphate, tributyl phosphate, trioctyl phosphate, triphenyl phosphate, tricresyl phosphate, tris(nonylphenyl)phosphate, and 2-ethylphenyl diphenyl phosphate.

The phenol-based antioxidant may include one or more selected from the group consisting of $\alpha$-tocopherol, butylhydroxytoluene, sinapyl alcohol, vitamin E, n-octadecyl-3-(3,5-di-t-butyl-4-hydroxyphenyl)propionate, 2-t-butyl-6-(3'-t-butyl-5'-methyl-2'-hydroxybenzyl)-4-methylphenyl acrylate, 2, 6-di-t-butyl-4-(N,N-dimethylaminomethyl)phenol, 3,5-di-t-butyl-4-hydroxybenzyl phosphonate diethyl ester, 2,2-bis(((3-(3,5-di-tert-butyl-4-hydroxyphenyl)propanoyl) oxy)methyl)propane-1,3-diyl bis(3-(3,5-di-tert)-butyl-4-hydroxyphenyl)propanoate), pentaerythritol tetrakis(3,5-di-tert-butyl-4-hydroxyhydrocinnamate), pentaerythritol tetrakis[3-(3,5-di-tert-butyl-4-hydroxyphenyl)propionate], and tetrakis [3-(3,5-di-t-butyl-4-hydroxyphenyl)propionyloxymethyl]methane.

The antioxidant may further include one or more selected from the group consisting of BHT, ascorbic acid, catechin, quercetin, dodecyl gallate, TBHQ, Ralox, Irganox 1135, Irganox 1076, nordihydroguaiaretic acid, epicatechin gallate, epigallocatechin gallate, epigallocatechin, propyl gallate, 2,3,5-trihydroxybutyrophenone, butylated hydroxyanisole, 4-hydroxymethyl-2,6-di-tert-butylphenol, $\alpha$-tocopherol, resveratrol, rutin, astaxanthin, lycopene, beta-carotene, and melatonin.

Based on the total weight of the biodegradable resin composition, the antioxidant may be included in a content of 5 wt% or less, 4 wt% or less, 3 wt% or less, 2 wt% or less, 1.5 wt% or less, 1 wt% or less, 0.5 wt% or less, 0.3 wt% or less, 0 to 5 wt%, 0.01 to 4 wt%, 0.1 to 3 wt %, 1 to 3 wt%, 1 to 2 wt%, 0.01 to 0.3 wt%, 0.05 to 0.3 wt%, 0.15 to 0.3 wt%, or 0.2 to 0.3 wt%.

The antioxidant may include both the phosphorus-based antioxidant and the phenol-based antioxidant. When the antioxidant includes both the phosphorus-based antioxidant and the phenol-based antioxidant, the weight ratio of the phosphorus-based antioxidant to the phenol-based antioxidant may be 1:10 to 10:1, 1:5 to 5:1, 1:1 to 5:1, 2:1 to 4:1, 2.5:1 to 3.5:1, 1:5 to 1:1, 1:2 to 1:4, or 1:2.5 to 1:3.5. When the range is satisfied, oxidation of the biodegradable resin composition may be delayed in various temperature ranges.

The biodegradable resin composition may include a heat stabilizer.

The heat stabilizer may be a phosphorus-based heat stabilizer. The heat stabilizer may include one or more selected from the group consisting of an amine-based high-temperature heat stabilizer such as tetraethylenepentamine, triethylphosphonoacetate, phosphoric acid, phosphorous acid, polyphosphric acid, trimethyl phosphate (TMP), triethyl phosphate, trimethyl phosphine, triphenyl phosphine and the like. The heat stabilizer may be an antioxidant having an antioxidant function. The content of the heat stabilizer may 3,000 ppm or less, 10 ppm to 3,000 ppm, 20 ppm to 2,000 ppm, 20 ppm to 1,500 ppm or 20 ppm to 1,000 ppm based on a total weight of the biodegradable resin.

The biodegradable resin composition may include a lubricant.

The lubricant may include one or more selected from the group consisting of fatty acid-based lubricants such as stearic acid; aliphatic alcohol-based lubricants; aliphatic amide-based lubricants such as stearamide; aliphatic ester-based lubricants such as stearic acid-n-butyl, hydroxystearic acid methyl, polyhydric alcohol fatty acid esters, saturated fatty acid esters, and ester wax; and fatty acid metal soap-based lubricants. Specifically, the lubricant may be a stearate-based lubricant, and may include one or more selected from the group consisting of calcium stearate, zinc stearate, barium stearate, magnesium stearate, glycerin stearate, and butyl stearate. The stearate-based lubricant may reduce heat generation due to friction during mixing, melting, and processing of raw materials, and has excellent dispersing and lubricating effects for a biodegradable polyester resin compared to price thereof, thereby improving manufacturing efficiency.

Based on the total weight of the biodegradable resin composition, the lubricant may be included in an amount of 5 wt% or less, 4 wt% or less, 3 wt% or less, 2 wt% or less, 1 wt% or less, less than 1 wt%, 0.9 wt% or less, 0.8 wt% or less, 0.7 wt% or less, 0.5 wt% or less, 0.3 wt% or less, or 0.1 wt% or less. When the range is satisfied, manufacturing efficiency may be improved without deteriorating the physical properties of the biodegradable resin composition.

The biodegradable resin composition may include a flame retardant. The flame retardant may include one or more selected from the group consisting of a halogen-based flame retardant, a phosphorus-based flame retardant, and a non-phosphorus halogen-based flame retardant such as metal hydrates.

The halogen-based flame retardant may include one or more selected from the group consisting of halogenated bisphenolic compounds such as halogenated bisphenyl alkanes, halogenated bisphenyl ethers, halogenated bisphenyl thioethers, and halogenated bisphenyl sulfones; and bisphenol-bis(alkyl ether) compounds such as brominated bisphenol A, brominated bisphenol S, chlorinated bisphenol A, and chlorinated bisphenol S.

The phosphorus-based flame retardant may include one or more selected from the group consisting of tris(diethyl phosphinic acid)aluminum, bisphenol A bis(diphenyl phosphate), phosphoric acid triaryl isopropyl, cresyl di-2,6-xylenyl phosphate, and aromatic condensation phosphoric acid ester.

The metal hydrates may include aluminum trihydrate, magnesium dihydroxide, or combinations thereof.

Flame retardant aids for improving the flame retardant effect may include one or more selected from the group consisting of antimony oxides such as antimony trioxide and antimony pentoxide, zinc oxide, iron oxide, aluminum oxide, molybdenum oxide, titanium oxide, calcium oxide, and magnesium oxide.

The biodegradable resin composition may include a foaming agent. The foaming agent may be mixed with the molten biodegradable resin composition or injected by applying pressure. The foaming agent may be a phase change from solid to gas or from liquid to gas or gas itself, and is used to control the foaming ratio (foaming density) of a foam sheet.

The foaming agent may include one or more selected from the group consisting of aliphatic hydrocarbons, alicyclic hydrocarbons, halogenated hydrocarbons, inorganic gases and water.

The biodegradable resin composition may include a dispersant. The dispersant may improve the dispersibility of a solvent and solute. The dispersant may include one or more selected from the group consisting of aliphatic polyesters, polylactic acid, polyglycolic acid, polycaprolactone, and polyhydroxyalkanoate.

Based on the total weight of the biodegradable resin composition, the dispersant may be included in an amount of 1 to 20 wt%, 1 to 15 wt%, 1 to 13 wt%, 1 to 11 wt%, 2 to 10 wt%, 5 to 15 wt%, 7 to 12 wt%, 2 to 8 wt%, 5 to 8 wt%, or 2 to 5 wt%.

The biodegradable resin composition may include a chain extender. The chain extender may include one or more selected from the group consisting of aromatic diisocyanates, aliphatic diisocyanates, isocyanurates, bisoxazolines, carboxylic acid anhydrides, and epoxides.

The aromatic diisocyanates may include one or more selected from the group consisting of tolylene 2,4-diisocyanate, tolylene 2,6-diisocyanate, 2,2'-diphenylmethane diisocyanate, 2,4'-diphenylmethane diisocyanate, 4,4'-diphenylmethane diisocyanate, naphthylene 1,5-diisocyanate, and xylylene diisocyanate.

The aliphatic diisocyanates may include one or more selected from the group consisting of 1,6-hexamethylene diisocyanate, isophorone diisocyanate, and methylene bis(4-isocyanatocyclohexane).

The isocyanurates may include isophorone diisocyanate or methylene bis(4-isocyanatocyclohexane).

The bisoxazolines may include one or more selected from the group consisting of 2,2'-bis(2-oxazoline), bis(2-oxazolinyl)methane, 1,2-bis(2-oxazolinyl)ethane, 1,3-bis(2-oxazolinyl)propane, and 1,4-bis(2-oxazolinyl)butane.

The epoxide refers to an epoxy-containing copolymer based on at least one of styrene, acrylic acid ester, and/or methacrylic acid ester, and is preferably a copolymer having a glycidyl (meth)acrylate content of greater than 20, 30, or 50 wt%.

Based on the total weight of the biodegradable resin composition, the chain extender may be included in an amount of 1.5 wt% or less, 1.4 wt% or less, 1.3 wt% or less, 1.2 wt% or less, 1.1 wt% or less, 1 wt% or less, 0.9 wt% or less, 0.8 wt% or less, 0.7 wt% or less, 0.6 wt% or less, 0.5 wt% or less, 0.4 wt% or less, 0.3 wt% or less, 0 wt% to 0.3 wt%, 0.001 wt% to 0.1 wt%, 0.001 wt% to 0.05 wt%, 0.005 wt% to 0.05 wt%, 0.005 wt% to 0.03 wt%, or 0.005 wt% to 0.002 wt%.

The biodegradable resin composition may include a hydrolysis inhibitor. The hydrolysis inhibitor may include a carbodiimide-based compound. The carbodiimide-based compound may react with moisture and acid to convert into a urea structure, thereby reducing the reactivity among moisture, acid, and an ester group included in a biodegradable resin, and thus reducing the phenomenon of the biodegradable resin being hydrolyzed by moisture and acid. In conclusion, the hydrolysis resistance of the biodegradable resin composition may be improved.

The carbodiimide-based compound may include a compound represented by Formula 5 below:

[Chemical Formula 5]

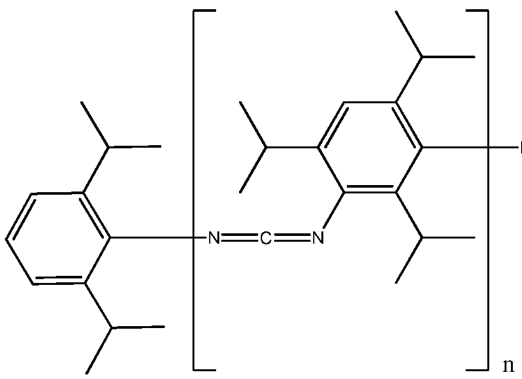

In Chemical Formula 5, n is an integer from 1 to 20.

The carbodiimide-based compound may be one or more selected from the group consisting of N,N'-di-o-tolylcarbodiimide, N,N'-diphenylcarbodiimide, N,N'-dioctyldecylcarbodiimide, N,N'-di-2,6-diketylphenylcarbodiimide, N-tolyl-N'cyclohexylcarbodiimide, N,N'-di-2,6-diisopropylphenylcarbodiimide, N,N'-di-2,6-di-tert-butylphenylcarbodiimide, N-tolyl-N'-phenylcarbodiimide, N,N'-di-p-nitrophenylcarbodiimide, N,N'-di-p-aminophenylcarbodiimide, N,N'-di-p-hydroxyphenylcarbodiimide, N,N'-dicyclohexylcarbodiimide, N,N'-di-p-tolylcarbodiimide, p-phenylene-bis-di-o-tolylcarbodiimide, p-phenylene-bisdicyclohexylcarbodiimide, hexamethylene-bisdicyclohexylcarbodiimide, a homopolymer of ethylene-bisdiphenylcarbodiimide and benzene-2,4-diisocyanato-1,3,5-tris(1-methylethyl), and a copolymer of 2,4-diisocyanato-1,3,5-tris(1-methylethyl) and 2,6-diisopropyl diisocyanate.

The weight average molecular weight of the carbodiimide-based compound may be 500 g/mol to 50,000 g/mol, 600 g/mol to 50,000 g/mol, 700 g/mol to 50,000 g/mol, 800 g/mol to 50,000 g/mol, 900 g/mol to 50,000 g/mol, 1,000 g/mol to 50,000 g/mol, 1,000 g/mol to 40,000 g/mol, or 1,000 g/mol to 30,000 g/mol. The weight average molecular weight may be measured as a relative value to a standard polystyrene (PS) sample by GPC using THF as an eluent. When the range is satisfied, the mechanical properties and hydrolysis resistance of the biodegradable resin composition may be improved.

The content of the hydrolysis inhibitor may be 0.1 wt% to 5.0 wt%, 0.1 wt% to 4.0 wt%, 0.1 wt% to 3.0 wt%, 0.1 wt% to 2.0 wt%, 0.1 wt% to 1.5 wt%, or 0.1 wt% to 1.0 wt% based on the total weight of the biodegradable resin composition. When the range is satisfied, the hydrolysis resistance and odor reduction effect of the biodegradable resin composition may be improved.

The breaking elongation, tensile strength and modulus of the biodegradable resin composition may be measured. FIG. 1 schematically illustrates a process of measuring the breaking elongation, tensile strength and modulus of the biodegradable resin composition according to the present invention.

Referring to FIG. 1, the biodegradable resin composition may be disposed between a pair of molds 100 and 200. Next, heat and pressure are applied to the pair of molds 100 and 200, and a biodegradable resin sheet 300 having a predetermined thickness may be manufactured.

The breaking elongation, tensile strength, and modulus of the biodegradable resin sheet 300 may be measured. The breaking elongation, tensile strength, and modulus of the biodegradable resin sheet 300 may be the same as the breaking elongation, tensile strength, and modulus of the biodegradable resin composition.

The molds 100 and 200 may be stainless steel molds. In the process of measuring the breaking elongation, the molds 100 and 200 may be heated at least one of about 160°C, about 180°C, or about 200°C.

In the process of molding the biodegradable resin sheet, the molds 100 and 200 may be pressurized with one of about 5 MPa, about 10 MPa, about 20 MPa or about 30 MPa.

By the process, the biodegradable resin sheet 300 may be formed. The thickness of the biodegradable resin sheet 300 may be one of about 200 $\mu$m, about 300 $\mu$m, about 500 $\mu$m, about 700 $\mu$m, about 900 $\mu$m, or about 1,000 $\mu$m.

Next, the biodegradable resin sheet 300 may be cut to manufacture a sample for measuring the breaking elongation, the tensile strength, and the modulus.

The sample may have a rectangular planar shape extending in a longitudinal direction. The sample may have a planar shape of dog bone.

In the sample, the width of a region to be measured may be one of about 10 mm, about 15 mm, about 20 mm and about 30 mm. In the sample, the length of a region to be measured may be one of about 30 mm, about 40 mm, about 50 mm, about 70 mm and about 100 mm.

Next, the sample may be fixed to a universal test machine such that the width between its jigs is the length of a region to be measured. Next, the breaking elongation, tensile strength, and modulus of the sample may be measured at room temperature according to ASTM D882. The breaking elongation, tensile strength, and modulus of the sample may be measured while stretching it at a rate of one of about 100 mm/min, about 200 mm/min, and about 300 mm/min. The breaking elongation, tensile strength, and modulus of the sample may be the breaking elongation, tensile strength, and modulus of the biodegradable resin composition.

The breaking elongation, tensile strength, and modulus of the biodegradable resin composition may be measured by Measurement Method 1 below:

[Measurement Method 1]

1) The biodegradable resin composition is placed between a pair of flat stainless steel molds, compressed at 180° C under a pressure of 20 MPa, and molded, so that a biodegradable resin composition sheet having a thickness of 900 $\mu$m is manufactured.
2) The biodegradable resin composition sheet is cut to produce a sample having a rectangular planar shape with a width of 15 mm.
3) According to ASTM D882, the breaking elongation, tensile strength, and modulus of a 50 mm part in length of the sample are measured.

The breaking elongation may be greater than about 300 %. The breaking elongation may be greater than about 350 %. The breaking elongation may be greater than about 400 %. The breaking elongation may be greater than about 450 %. The breaking elongation may be greater than about 500 %. The breaking elongation may be greater than about 550 %. A maximum value of the breaking elongation may be about 1,000 %. The breaking elongation may be greater than 300 % and 2,000 % or less. The breaking elongation may be greater than 300 % and 1,500 % or less. The breaking elongation may be greater than 350 % and 1,500 % or less. The breaking elongation may be greater than 400 % and 1,500 % or less. The breaking elongation may be greater than 400 % and 2,000 % or less.

The tensile strength may be about 0.7 $kgf/mm^2$ to about 3 $kgf/mm^2$. The tensile strength may be about 0.7 $kgf/mm^2$ to about 2 $kgf/mm^2$. The tensile strength may be about 0.7 $kgf/mm^2$ to about 3 $kgf/mm^2$.

The modulus may be about 5 $kgf/mm^2$ to about 30 $kgf/mm^2$. The modulus may be about 10 $kgf/mm^2$ to about 20 $kgf/mm^2$. The modulus may be about 12 $kgf/mm^2$ to about 18 $kgf/mm^2$.

When the biodegradable resin composition satisfies the breaking elongation, tensile strength, and modulus in the ranges, breakage in a film process may be low, and a defect rate may be reduced.

The biodegradable resin composition may have an inorganic content-weighted elongation at break. The inorganic content-weighted elongation at break may be a value obtained by multiplying a breaking elongation measured by Measurement Method 1 by the wt % of the inorganic filler based on the total weight of the biodegradable resin composition.

Specifically, the inorganic content-weighted elongation at break (WE) may be derived by Equation 1 below:

[Equation 1]

$$WE = E \times W$$

In Equation 1, E is the breaking elongation, WE is the inorganic content-weighted elongation at break, and W is the wt % of the inorganic filler based on the total weight of the biodegradable resin composition.

The inorganic content-weighted elongation at break may be greater than about 100 %. The inorganic content-weighted elongation at break may be greater than about 130 %. The inorganic content-weighted elongation at break may be greater than about 150 %. The inorganic content-weighted elongation at break may be greater than about 200 %. The inorganic content-weighted elongation at break may be greater than about 250 %. A maximum value of the inorganic content-weighted elongation at break may be about 800 %.

Since the biodegradable resin composition has the inorganic content-weighted elongation at break in the above ranges, it may have an improved breaking elongation while including a high content of the inorganic filler. The hardness of a molded article including the biodegradable resin composition may increase as the content of the inorganic filler of the biodegradable resin composition increases. The hardness improvement of the molded article is due to enhanced mechanical properties, and may be applied to a molded article requiring hard properties. For example, the molded article may be applied to packaging containers, packaging materials, and disposable tableware. The molded article can be used as a substitute for Styrofoam. In addition, the biodegradable resin composition may be applied to a molded article requiring high mechanical strength and high elasticity because it shows a high breaking elongation while having a high content of the inorganic filler. Specifically, it may be applied to packaging containers, packaging materials, disposable tableware and wire-covering materials. In particular, since the inorganic filler according to the present invention is surface-treated as described above, the biodegradable resin composition including the surface-treated inorganic filler may have an improved inorganic content-weighted elongation at break. Through the surface treatment of the inorganic filler, the dispersibility is improved and the surface-treated inorganic filler particles may improve the intermolecular force of the resin composition, so that the tensile strength and breaking elongation of the biodegradable resin composition may be improved simultaneously. As a result, the tensile strength and the breaking elongation may be improved, and thus the frequency of film breakage may be reduced during film processes such as a blown process, so that the processability may also be improved.

In particular, when the surface treatment agent includes a phthalic acid ester-based compound, the biodegradable resin composition may have an improved inorganic content-weighted elongation at break. Accordingly, the biodegradable resin composition may have improved mechanical properties while having improved processability for film processes, etc.

The biodegradable resin composition may have an inorganic content-weighted tensile strength. The inorganic content-weighted tensile strength may be a value obtained by multiplying the tensile strength by the wt % of the inorganic filler based on the total weight of the biodegradable resin composition.

Specifically, the inorganic content-weighted tensile strength (WT) may be derived by Equation 1 below.

[Equation 2]

$$WT = T \times W$$

In Equation 2, T is the tensile strength, WT is the inorganic content-weighted tensile strength, and W is the wt % of the inorganic filler based on the total weight of the biodegradable resin composition.

The inorganic content-weighted tensile strength may be about 0.2 kgf/mm$^2$ to about 2 kgf/mm$^2$. The inorganic content-weighted tensile strength may be about 0.3 kgf/mm$^2$ to about 1.7 kgf/mm$^2$. The inorganic content-weighted tensile strength may be about 0.4 kgf/mm$^2$ to about 1.5 kgf/mm$^2$. The inorganic content-weighted tensile strength may be about 0.3 kgf/mm$^2$ to about 1.2 kgf/mm$^2$.

Since the biodegradable resin composition has the inorganic content-weighted tensile strength in the above range, it may have appropriate tensile strength while including a high content of the inorganic filler. Accordingly, the biodegradable resin composition may have improved mechanical properties while having improved chemical properties due to the high content of the inorganic filler. The hardness of a molded article containing the biodegradable resin composition increases as the content of the inorganic filler in the biodegradable resin composition increases. The improved hardness of the molded article is due to enhanced mechanical properties, and it may be applied to products that require strong physical properties. For example, the molded article may be applied to packaging containers, packaging materials, and disposable tableware. The molded article may be used as a substitute for Styrofoam. In addition, Because the tensile strength of the biodegradable resin composition is high, it may be applied to molded articles that require high rigidity. In addition, the molded article may have a low deformation rate when subjected to external impact due to its high rigidity. As a result, the biodegradable resin composition may be applied to molded articles that require high mechanical strength and high rigidity because it has a high content of the inorganic filler and high tensile strength. Specifically, it may be applied to packaging containers, packaging materials, disposable tableware and wire-covering materials.

The biodegradable resin composition may have an inorganic content-weighted modulus. The inorganic content-weighted modulus may be a value obtained by multiplying the modulus by the wt % of the inorganic filler based on the total weight of the biodegradable resin composition.

Specifically, the inorganic content-weighted modulus (WM) may be derived by Equation 3 below:

[Equation 3]

$$WM = M \times W$$

In Equation 3, M is the modulus, WM is the inorganic content-weighted modulus, and W is the wt % of the inorganic filler based on the total weight of the biodegradable resin composition.

The inorganic content-weighted modulus may be about 2 kgf/mm$^2$ to about 20 kgf/mm$^2$. The inorganic content-weighted modulus may be about 3 kgf/mm$^2$ to about 17 kgf/mm$^2$. The inorganic content-weighted modulus may be about 4 kgf/mm$^2$ to about 15 kgf/mm$^2$.

Since the biodegradable resin composition has the inorganic content-weighted modulus in the above range, it may have an appropriate modulus while containing a high content of the inorganic filler. Accordingly, the biodegradable resin composition may have improved chemical properties due to the high content of the inorganic filler while having improved processability.

The biodegradable resin composition may have a melt index. The melt index of the biodegradable resin composition may be measured under a load of 2.16 kg according to ASTM D1238.

The melt index of the biodegradable resin composition at 190°C may be 0.5 g/10 min to 10 g/10 min, 0.5 g/10 min to 8 g/10 min, 1 g/10 min to 8 g/10 min, or 1 g/10 min to 5 g/10 min.

The melt index of the biodegradable resin composition at 230°C may be 5 g/10 min to 20 g/10 min, 5 g/10 min to 15 g/10 min, 8 g/10 min to 15 g/10 min, or 10 g/10 min to 15 g/10 min.

The melt index of the biodegradable resin composition at 250°C may be 12 g/10 min to 30 g/10 min, 15 g/10 min to 30 g/10 min, 15 g/10 min to 25 g/10 min, or 15 g/10 min to 20 g/10 min.

When the range is satisfied, the biodegradable resin composition may have appropriate fluidity, so it may exhibit improved processability when manufactured into a molded article by an injection process.

The biodegradable resin composition may have an inorganic content-weighted melt index. The inorganic content-weighted melt index may be a value obtained by multiplying the melt index by the wt % of the inorganic filler based on the total weight of the biodegradable resin composition. The melt index of the biodegradable resin composition may be measured at 190°C under a load of 2.16 kg according to ASTM D1238.

Specifically, the inorganic content-weighted melt index (WMI) may be derived by Equation 4 below:

[Equation 4]

$$WMI = MI \times W$$

In Equation 4, MI is the melt index, WMI is the inorganic content-weighted melt index, and W is the wt % of the inorganic filler based on the total weight of the biodegradable resin composition.
The inorganic content-weighted melt index may be about 0.05 $kgf/mm^2$ to about 5 $kgf/mm^2$. The inorganic content-weighted melt index may be about 0.05 $kgf/mm^2$ to about 4 $kgf/mm^2$. The inorganic content-weighted melt index may be about 0.1 $kgf/mm^2$ to about 4 $kgf/mm^2$.
Since the biodegradable resin composition has the inorganic content-weighted melt index in the above range, it may have an appropriate melt index while containing a high content of the inorganic filler. Accordingly, the biodegradable resin composition may have improved chemical properties due to the high content of the inorganic filler while having improved processability.
The biodegradable resin composition may have a wet hardness reduction rate.
The wet hardness reduction rate of the biodegradable resin composition, measured by Measurement Method 2 below, may be 20 % or less, 19 % or less, 18 % or less, 17 % or less, 16 % or less, or 15 % or less:

[Measurement Method 2]

1) A polyester block with a thickness of 2.5 mm is manufactured using the biodegradable resin composition.
2) The initial hardness of the polyester block, and the wet hardness of the polyester block after immersing in water at 30°C for 24 hours are measured.
3) The wet hardness reduction rate is obtained by dividing a difference between the initial hardness and the wet hardness by the initial hardness.

The polyester block with a thickness of 2.5 mm may be manufactured by drying the biodegradable resin composition at about 80 °C for about 20 minutes with a moisture content of about 500 ppm, placing it in a stainless steel frame, and compressing it with a pressure of about 10 MPa at about 210 °C for about 5 minutes.
The initial hardness may be a Shore D hardness of about 30 to about 45, about 33 to about 43, or about 35 to about 41. The wet hardness after immersing at 30°C for 24 hours may be a Shore D hardness of about 28 to about 43, 29 to about 41, or about 30 to about 38. When the range is satisfied, the biodegradable resin composition may maintain high mechanical properties even when exposed to water or in a high-humidity environment.
The biodegradable resin composition may include an oligomer.
The oligomer may have a number average molecular weight of 400 g/mol to 1,300 g/mol.
The content of the oligomer may be 500 ppm to 40,000 ppm, 1,000 ppm to 40,000 ppm, 1,000 ppm to 30,000 ppm, or 1,000 ppm to 20,000 ppm based on the total weight of the biodegradable resin composition.
The oligomer may be a reaction product of at least two of the diol, the aromatic dicarboxylic acid and the aliphatic dicarboxylic acid. The oligomer may be a reaction product of 1,4-butanediol, terephthalic acid and adipic acid.
The oligomer may include a first oligomer, a second oligomer, a third oligomer and a fourth oligomer.
The first oligomer may have a number average molecular weight of 415 g/mol to 425 g/mol, 419 g/mol to 424 g/mol, or 420 g/mol to 423 g/mol.
The first oligomer may be a reaction product formed by reacting two molecules of 1,4-butanediol, one molecule of terephthalic acid and one molecule of adipic acid. That is, the first oligomer may include the 1,4-butanediol, the terephthalic acid and the adipic acid in a molar ratio of 2:1:1. In addition, the first oligomer may have four ester bonds. The first oligomer may have a ring structure.
The first oligomer may include one first unit represented by Chemical Formula 6 below, and one second unit represented by Chemical Formula 7 below:

[Chemical Formula 6]

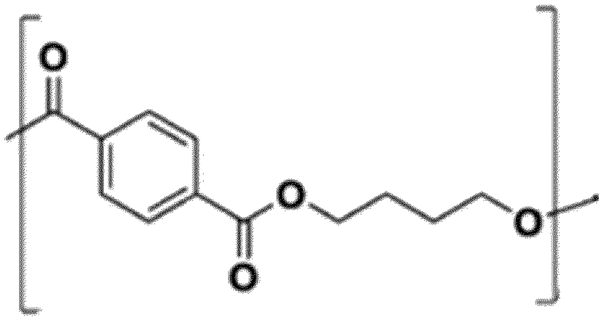

[Chemical Formula 7]

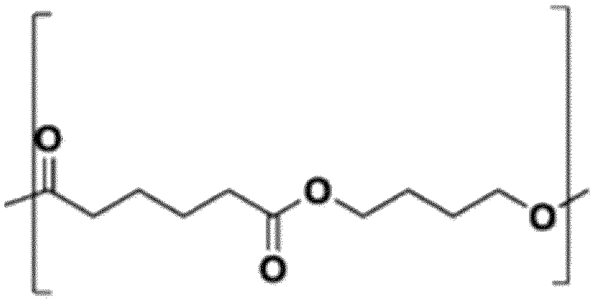

The first oligomer may have a ring structure. The first oligomer may include the first unit and the second unit and may have a ring structure.

The first oligomer may be represented by Chemical Formula 8 below:

[Chemical Formula 8]

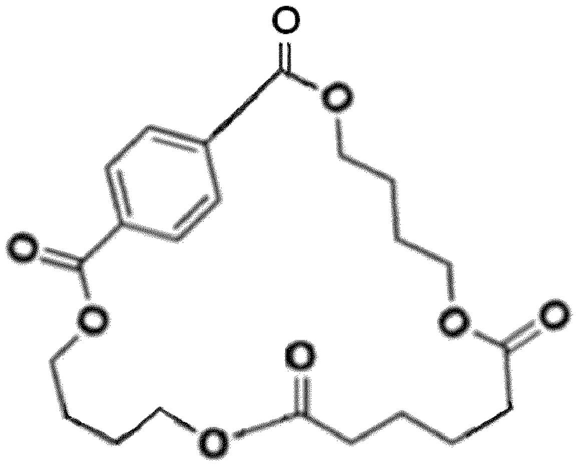

The content of the first oligomer may be about 1,000 ppm to about 6,000 ppm, 1,500 ppm to about 5,000 ppm, 2,000 ppm to about 4,500 ppm, or 2,500 ppm to about 5,000 ppm based on the total weight of the biodegradable resin composition.

The second oligomer may have a number average molecular weight of 620 g/mol to 630 g/mol, 622 g/mol to 630 g/mol, or 622 g/mol to 628 g/mol.

The second oligomer may be a reaction product formed by reacting three molecules of 1,4-butanediol, one molecule of terephthalic acid and two molecules of adipic acid. That is, the second oligomer may include the 1,4-butanediol, the terephthalic acid and the adipic acid in a molar ratio of 3:1:2. In addition, the second oligomer may have six ester bonds.

The second oligomer may include one first unit represented by Chemical Formula 6 and two second units

represented by Chemical Formula 7.

The second oligomer may be at least one selected from the group consisting of Chemical Formula 9, Chemical Formula 10 and Chemical Formula 11 below:

[Chemical Formula 9]

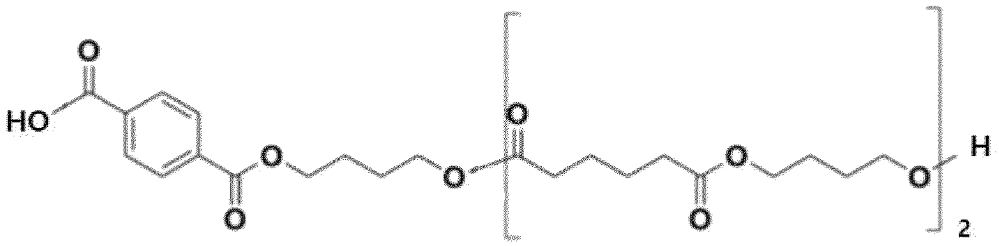

[Chemical Formula 10]

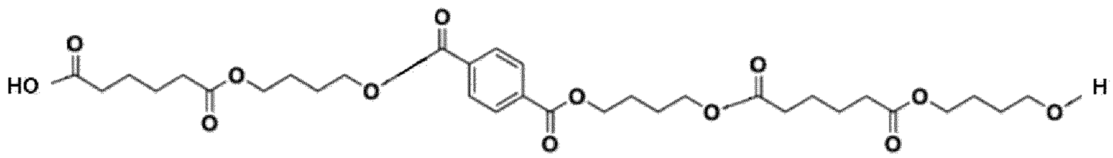

[Chemical Formula 11]

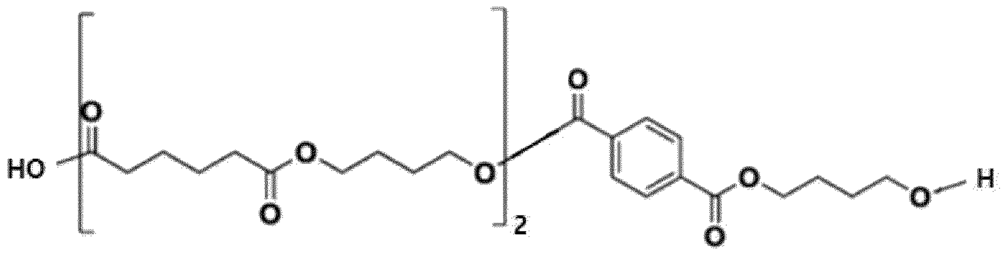

The content of the second oligomer may be about 1,000 ppm to about 5,000 ppm, 1,200 ppm to about 4,500 ppm, 1,500 ppm to about 4,000 ppm, or 2,000 ppm to about 3,800 ppm based on the total weight of the biodegradable resin composition.

The third oligomer may have a number average molecular weight of 640 g/mol to 650 g/mol, 642 g/mol to 650 g/mol, or 642 g/mol to 648 g/mol.

The third oligomer may be a reaction product formed by reacting three molecules of 1,4-butanediol, two molecules of terephthalic acid and one molecule of adipic acid. That is, the third oligomer may include the 1,4-butanediol, the terephthalic acid and the adipic acid in a molar ratio of 3:2:1. In addition, the third oligomer may have six ester bonds.

The third oligomer may include two first units represented by Chemical Formula 6 and one second unit represented by Chemical Formula 7.

The third oligomer may be at least one selected from the group consisting of Chemical Formula 12, Chemical Formula 13 or Chemical Formula 14 below:

[Chemical Formula 12]

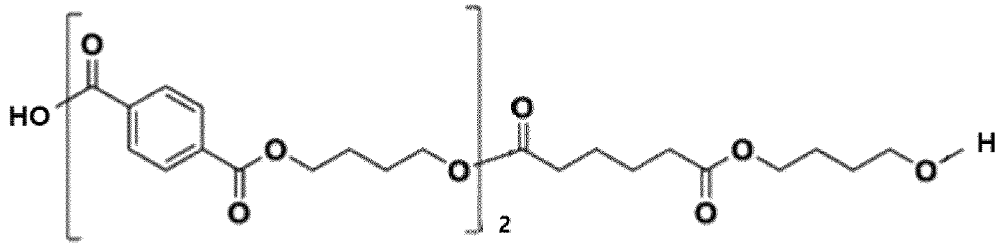

[Chemical Formula 13]

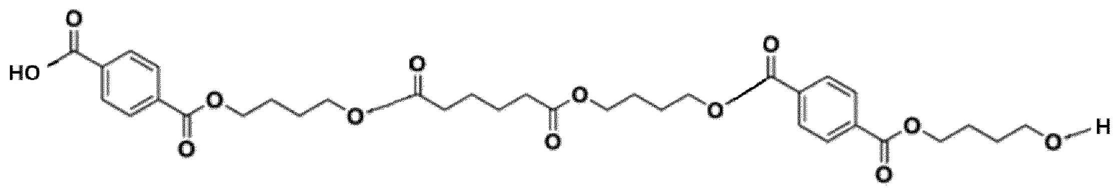

[Chemical Formula 14]

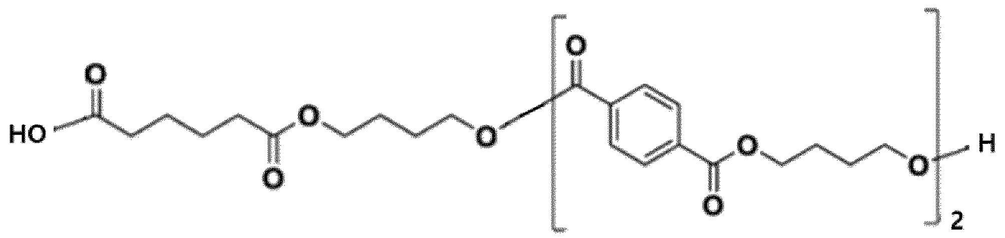

The content of the third oligomer may be about 300 ppm to about 3,000 ppm, 500 ppm to about 2,500 ppm, 700 ppm to about 2,000 ppm, or 800 ppm to about 1,800 ppm based on the total weight of the biodegradable resin composition.

The fourth oligomer may have a number average molecular weight of 840 g/mol to 850 g/mol, 841 g/mol to 845 g/mol, or 842 g/mol to 845 g/mol.

The fourth oligomer may include a reaction product formed by reacting four molecules of 1,4-butanediol, two molecules of terephthalic acid and two molecules of adipic acid. That is, the fourth oligomer may include the 1,4-butanediol, the terephthalic acid and the adipic acid in a molar ratio of 4:2:2. In addition, the fourth oligomer may have eight ester bonds.

The fourth oligomer may include two first units represented by Chemical Formula 6 and two second units represented by Chemical Formula 7.

In addition, the fourth oligomer may include at least one of the following bonding structures:

1) First unit - First unit - Second unit - Second unit
2) First unit - Second unit - First unit - Second unit
3) First unit - Second unit - Second unit - First unit
4) Second unit - First unit - First unit - Second unit

The content of the third oligomer may be about 300 ppm to about 3,500 ppm, 500 ppm to about 3,000 ppm, 700 ppm to about 2,500 ppm, or 800 ppm to about 2,000 ppm based on the total weight of the biodegradable resin composition.

A ratio of the first oligomer based on the entire oligomers (the content of the first oligomer/the content of the entire oligomers) may be about 0.20 to about 0.5, about 0.30 to about 0.45, or about 0.32 to about 0.43.

A ratio of the second oligomer based on the entire oligomers (the content of the second oligomer/the content of

the entire oligomers) may be about 0.15 to about 0.45, about 0.20 to about 0.40, about 0.23 to about 0.37, or about 0.25 to about 0.36.

A ratio of the third oligomer based on the entire oligomers (the content of the third oligomer/the content of the entire oligomers) may be about 0.05 to about 0.25, about 0.07 to about 0.20, about 0.08 to about 0.17, or about 0.09 to about 0.16.

A ratio of the fourth oligomer based on the entire oligomers (the content of the fourth oligomer/the content of the entire oligomers) may be about 0.05 to about 0.30, about 0.07 to about 0.25, about 0.08 to about 0.22, or about 0.09 to about 0.19.

A ratio of the second oligomer based on the first oligomer (the content of the second oligomer/ the content of the first oligomer) may be about 0.5 to about 1.2, about 0.55 to about 1.0, about 0.6 to about 0.95, or about 0.7 to about 0.9.

A ratio of the third oligomer based on the first oligomer (the content of the third oligomer/the content of the first oligomer) may be about 0.22 to about 0.50, about 0.23 to about 0.45, or about 0.25 to about 0.42.

A ratio of the fourth oligomer based on the first oligomer (the content of the fourth oligomer/the content of the first oligomer) may be about 0.25 to about 0.65, about 0.27 to about 0.55, about 0.30 to about 0.50, or about 0.30 to about 0.48.

The second oligomer may be included in the oligomer at a higher content than the third oligomer.

A ratio of the third oligomer based on the second oligomer (the content of the third oligomer/ the content of the second oligomer) may be about 0.2 to about 0.6, about 0.24 to about 0.5, or about 0.27 to about 0.45.

The number average molecular weight and content of the oligomer may be measured by liquid chromatography-mass spectrometry.

Specifically, the biodegradable resin composition is crushed and classified to produce a powder having an average particle diameter (D50) of about 50 $\mu$m. Next, the powder is immersed in an organic solvent such as acetonitrile at room temperature for about 24 hours. Next, after a supernatant of the organic solvent is sampled, the number average molecular weight and content of the oligomer may be measured by the liquid chromatography-mass spectrometry. In addition, to measure the content of the oligomer, dibutyl phthalate may be used as a standard material and a calibration curve may be obtained.

The oligomer may be a hydrophilic regulator capable of adjusting the hydrophilicity and/or hydrophobicity of the biodegradable resin composition. Accordingly, the oligomer may appropriately control the hydrolysis degree of the biodegradable resin composition. The oligomer may be a hydrolysis regulator that appropriately controls the hydrolysis degree of the biodegradable resin composition.

In addition, the oligomer may appropriately control the biodegradability degree of the biodegradable resin composition. The oligomer may be a biodegradation regulator that appropriately controls the biodegradability degree of the biodegradable resin composition.

Since the biodegradable resin composition according to an embodiment includes the oligomer within the range, it may have an appropriate hydrolysis degree and an appropriate biodegradability degree. In particular, the biodegradable resin composition according to an embodiment includes the first oligomer, the second oligomer, the third oligomer and the fourth oligomer within the range, it may have an appropriate hydrolysis degree and an appropriate biodegradability degree.

Since the biodegradable resin composition includes an oligomer having the above-described characteristics, it may have a low hydrolysis degree in an initial period and a high hydrolysis degree and high biodegradability degree in a later period. Accordingly, the biodegradable resin composition may be efficiently applied to a film for packaging and the like. That is, a film made of the biodegradable resin composition may be used for general purposes such as packaging. Here, since the biodegradable resin composition has a low hydrolysis degree in an initial period, the biodegradable film may maintain mechanical and chemical properties to a certain extent or more within a period of normal use by a user.

In addition, since the biodegradable resin composition according to an embodiment includes an oligomer having the above-described characteristics, it may have a high later hydrolysis degree. Accordingly, a film made of the biodegradable resin composition may be easily degraded when discarded after use.

In addition, the biodegradable resin composition includes an oligomer having the above-described characteristics, decomposition by ambient moisture and decomposition by microorganisms may be complemented each other. Accordingly, the biodegradable resin composition may have a high biodegradability degree while having a low hydrolysis degree in an initial period.

In addition, since the biodegradable resin composition includes an oligomer having the above-described characteristics, it may have a biodegradability per aliphatic carboxylic acid of about 1.5 or more. That is, the biodegradable resin composition has a high biodegradability degree while having a low aliphatic carboxylic acid content. Accordingly, since the biodegradable resin composition has a relatively high aromatic carboxylic acid content, it may have a high biodegradability in a later period while having a high hydrolysis resistance in an initial period. The biodegradable resin composition may maintain mechanical and chemical properties above a certain level during the period of use by a user. At the same time, since the biodegradable resin composition has a high later hydrolysis degree, it may be easily degraded in rivers or sea. That is, the biodegradable resin composition may solve environmental problems such as marine plastic problems.

The biodegradable resin composition may have a tensile strength increase rate after being stretched.

The tensile strength increase rate after being stretched may be measured by the following method.

First, the sample is stretched in a longitudinal direction. The sample may be stretched at one of about 25 °C, about 50 °C, about 75 °C, and about 100 °C. In addition, the sample may be stretched in at least one ratio of about 50 %, about 100 %, about 150 %, and about 200 %. In addition, the sample may be stretched in one rate of about 50 mm/min, about 100 mm/min, and about 150 mm/min.

The tensile strength of the stretched sample may be measured by the method described above.

The tensile strength increase rate after being stretched is obtained by dividing a difference between the tensile strength of the sample after being stretched and the tensile strength of the sample before stretching by the tensile strength of the sample before stretching.

Specifically, the tensile strength increase rate (ETR) after being stretched may be derived by Equation 5 below:

[Equation 5]

$$ETR = (T2 - T1)/T1$$

In Equation 5, ETR is the tensile strength increase rate after being stretched, T1 is the tensile strength of the sample before stretching, and T2 is the tensile strength after being stretched.

More specifically, the tensile strength increase rate may be measured by Measurement Method 3 below.

[Measurement Method 3]

1) The sample is stretched 100% in a longitudinal direction at 25°C.
2) The tensile strength of a 50 mm part in length of the stretched sample is measured in the longitudinal direction according to ASTM D882.
3) The tensile strength increase rate is obtained by dividing a difference between the tensile strength after being stretched and the tensile strength before stretching by the tensile strength before stretching.

In the biodegradable resin composition, a tensile strength increase rate after being stretched by 100% may be greater than 200 %. In the biodegradable resin composition, the tensile strength increase rate after being stretched by 100% may be greater than 250 %. In the biodegradable resin composition, the tensile strength increase rate after being stretched by 100% may be greater than 300 %. In the biodegradable resin composition, the tensile strength increase rate after being stretched by 100% may be greater than 350 %. A maximum value of the tensile strength increase rate after being stretched by 100% may be about 900 %.

A tensile strength after being stretched by 100 % may be about 3 $kgf/mm^2$ to about 15 $kgf/mm^2$. The tensile strength after being stretched by 100 % may be about 3 $kgf/mm^2$ to about 10 $kgf/mm^2$. The tensile strength after being stretched by 100 % may be about 4 $kgf/mm^2$ to about 9 $kgf/mm^2$. The tensile strength after being stretched by 100 % may be about 5 $kgf/mm^2$ to about 8 $kgf/mm^2$.

Since the biodegradable resin composition has a tensile strength increase rate in the above range after being stretched by 100%, it may have improved mechanical properties when processed into films, etc.

<Biodegradable molded article>

A biodegradable molded article according to the present invention includes a biodegradable resin, an inorganic filler, and a fluidity enhancer, wherein the fluidity enhancer includes a biodegradable resin composition including a phthalic acid ester-based compound.

The biodegradable resin composition may be the same as the biodegradable resin composition described above.

The biodegradable molded article according to the present invention may be manufactured from the biodegradable resin composition. The biodegradable molded article may be manufactured by molding the biodegradable resin composition by a method known in the art, such as extrusion or injection, and the molded article may be a nonwoven fabric, a vacuum-formed sheet, a blown molded article, or an injection-molded article, but is not limited thereto. For example, the biodegradable molded article may be an agricultural mulching film, a cosmetic container, a diaper sheet, a bathroom product, a gift box, a disposable glove, a food packaging material, a fabric, a knitted fabric, or a rope. Since the biodegradable molded article is manufactured from the biodegradable resin composition having excellent mechanical

properties and hydrolysis resistance, it may exhibit excellent properties when applied to packaging materials and mulching films that require dimensional stability against moisture, etc. in an external environment.

FIG. 2 schematically illustrates the biodegradable molded article according to the present invention. Referring to FIG. 2, a biodegradable molded article 10 may be a disposable container that can be used as a food packaging container, such as a lunch box. In addition, the biodegradable molded article may be variously shaped molded articles such as a disposable straw, spoon, plate, fork, etc.

The biodegradable molded article may be a biodegradable film.

The thickness of the biodegradable film may be about 5 $\mu$m to about 300 $\mu$m. The thickness of the biodegradable film may be about 5 $\mu$m to about 180 $\mu$m, about 5 $\mu$m to about 160 $\mu$m, about 10 $\mu$m to about 150 $\mu$m, about 15 $\mu$m to about 130 $\mu$m, about 20 $\mu$m to about 100 $\mu$m, about 25 $\mu$m to about 80 $\mu$m, or about 25 $\mu$m to about 60 $\mu$m.

The biodegradable film may have a biodegradability degree and hydrolysis degree substantially the same as those of the biodegradable resin composition described above.

The biodegradable film may be manufactured from the biodegradable resin composition or pellets made of the biodegradable resin composition.

Specifically, a method of manufacturing the biodegradable film may include a step of preparing a biodegradable resin composition, and a step of drying and melt-extruding the biodegradable resin composition

In the step of drying and melt-extruding the biodegradable resin composition, the drying may be performed at about 60 °C to about 100 °C for about 2 hours to about 12 hours. The drying may be performed at about 65 °C to about 95 °C, about 70 °C to about 90 °C, or about 75 °C to about 85 °C for about 3 hours to about 12 hours or about 4 hours to about 10 hours. By ensuring that the drying process conditions of the pellets satisfy the ranges, the quality of a biodegradable film or molded article manufactured may be further improved. The moisture content in the biodegradable resin composition that has undergone the drying step may be about 500 ppm or less based on the total weight of the biodegradable resin composition.

In the drying and melt-extruding step, the melt-extruding may be performed at about 250 °C or lower. The melt-extruding may be performed at about 245 °C or lower, about 220 °C or lower, about 215 °C or lower, about 100 °C to about 250 °C, about 120 °C to about 245 °C, or about 130 °C to about 215 °C. The melt-extruding may be performed in a blown film process. The melt-extruding may be performed in a T-die. The film manufacturing process may be a calendaring process.

The biodegradable molded article may be a biodegradable sheet. The thickness of the biodegradable sheet may be 5 $\mu$m to 1,000 $\mu$m, 10 $\mu$m to 1,000 $\mu$m, 15 $\mu$m to 1,000 $\mu$m, 20 $\mu$m to 1,000 $\mu$m, 25 $\mu$m to 1,000 $\mu$m, 30 $\mu$m to 1,000 $\mu$m, 35 $\mu$m to 1,000 $\mu$m, or 40 $\mu$m to 1,000 $\mu$m. The tear strength of the biodegradable sheet may be 100 N/cm or more, 110 N/cm or more, 120 N/cm or more, 130 N/cm or more, 140 N/cm or more, 150 N/cm or more, 700 N/cm or less, 650 N/cm or less, 600 N/cm or less, 550 N/cm or less, or 500 N/cm or less. When the range is satisfied, the sheet does not tear easily and may be easily decomposed when discarded.

Hereinafter, the present invention will be described in more detail based on examples and comparative examples. However, the examples and comparative examples are presented to explain the present invention in more detail, and the present invention is not limited by the examples and comparative examples.

## Examples

- Biodegradable resin: Ecopond PBAT resin
- Biodegradable resin #2: Ecovance PBAT resin
- Biodegradable resin #3: Jinhui PBAT resin
- Inorganic filler #1: Heavy calcium carbonate (average particle diameter: 2.2 $\mu$m, BET specific surface area: 1.0 $m^2/g$, roundness: 0.85)
- Inorganic filler #2: Heavy calcium carbonate (average particle diameter 1.8 $\mu$m, BET specific surface area 1.3 $m^2/g$, roundness: 0.85)
- Plasticizer: Glycerol monostearate (GMS)
- Antioxidant #1: Phenol-based antioxidant, Adeca Korea Co., AO-60
- Antioxidant #2: Phosphorus-based antioxidant, Adeca Korea Co., 2112

## Manufacturing examples - Manufacture of surface-treated inorganic fillers

### Manufacturing Example 1

In an externally heated rotary kiln, the inorganic filler #1 was heat-treated for about 5 minutes under conditions:

about 420°C and a rotation speed of about 4 rpm.

Next, the heat-treated inorganic filler #1, stearic acid, and diethylhexyl phthalate (DEHP) were added to a mixer and mixed at about 130°C for about 10 minutes. Here, 1 part by weight of the steric acid and 0.3 parts by weight of the diethylhexyl phthalate (DEHP) were mixed based on 100 parts by weight of the heat-treated inorganic filler #1.

Next, the surface-treated inorganic filler #1 was classified to manufacture the inorganic filler #1 having an average particle diameter of about 2.1 $\mu$m.

**Manufacturing Examples 2 to 4**

Inorganic fillers were manufactured in the same process as in Manufacturing Example 1 except that the inorganic fillers were manufactured according to compositions and contents shown in Table 1 below.

[Table 1]

| Classification | Inorganic filler #1 | Inorganic filler #2 | Stearic acid | Diethylhexyl phthalate | Heat treatment | Surface treatment |
|---|---|---|---|---|---|---|
| Unit | parts by weight | | | | - | |
| Manufacturing Example 1 | 100 | - | 1 | 0.3 | ○ | ○ |
| Manufacturing Example 2 | - | 100 | 1 | 0.2 | ○ | ○ |
| Manufacturing Example 3 | 100 | - | 0.5 | 0.5 | ○ | ○ |
| Manufacturing Example 4 | 100 | - | - | - | × | × |

**Example 1**

The biodegradable resin, the inorganic filler (Manufacturing Example 1), the plasticizer, the antioxidant #1 and the antioxidant #2 were fed in a weight ratio of 58.2:40:1.6:0.04:0.16 (biodegradable resin: inorganic filler (Manufacturing Example 1): plasticizer: antioxidant #1: antioxidant #2) into a kneader reactor, and kneaded at 175°C. Next, it was extruded using an extrusion molding machine equipped with a single screw, cut using a hot-cut pellet cutter, and cooled, thereby producing a pelletized biodegradable resin composition.

**Examples 2 to 5 and Comparative Examples 1 to 3**

Pelletized biodegradable resin compositions were prepared in the same process as in Example 1 except that the biodegradable resin compositions were pelletized according to compositions shown in Table 2.

[Table 2]

| Classific ation | Biodegra dable resin #1 | Biodegra dable resin #2 | Biodegra dable resin #3 | Inorganic filler | plastici zer | Antioxi dant #1 | Antioxi dant #2 |
|---|---|---|---|---|---|---|---|
| Unit | wt % | | | | | | |
| Example 1 | 58.30 | - | - | Manufact uring Example 1 40.00 | 1.50 | 0.04 | 0.16 |
| Example 2 | - | 58.20 | - | Manufact uring Example 1 40.00 | 1.60 | 0.04 | 0.16 |
| Example 3 | - | - | 58.30 | Manufact uring Example 1 40.00 | 1.50 | 0.04 | 0.16 |
| Example 4 | 58.20 | - | - | Manufact uring Example 2 40.00 | 1.60 | 0.04 | 0.16 |
| Example 5 | - | 58.30 | - | Manufact uring Example 3 40.00 | 1.50 | 0.04 | 0.16 |

(continued)

| Classification | Biodegradable resin #1 | Biodegradable resin #2 | Biodegradable resin #3 | Inorganic filler | plasticizer | Antioxidant #1 | Antioxidant #2 |
|---|---|---|---|---|---|---|---|
| Unit | wt % | | | | | | |
| Comparative Example 1 | 58.20 | - | - | Manufact uring Example 4 40.00 | 1.60 | 0.04 | 0.16 |
| Comparative Example 2 | - | 58.20 | - | Manufact uring Example 4 40.00 | 1.60 | 0.04 | 0.16 |
| Comparative Example 3 | - | - | 58.20 | Manufact uring Example 4 40.00 | 1.60 | 0.04 | 0.16 |

**Experimental examples**

<Manufacture of films>

Each of the pelletized biodegradable resin compositions produced in Examples 1 to 5 and Comparative Examples 1 to 3 was melt-extruded at 160 °C using a blown film extrusion line (YOUJIN ENGINEERING CO., LTD.), and then a biodegradable resin film having a thickness of 30 $\mu$m was manufactured.

<Manufacture of non-stretched sheet samples>

Each of the pelletized biodegradable resin compositions manufactured in Examples 1 to 5 and Comparative Examples 1 to 3 was placed on a flat stainless steel (SUS) plate measuring 12 cm in width and 12 cm in length, and then manufactured into a biodegradable resin sheet having an average thickness of 900 $\mu$m at 180 °C under a pressure of 20 MPa. Next, the sheet was cut to produce a rectangular flat sample with a width of 15 mm.

<Manufacture of stretched sheet samples>

The produced sample was stretched in a ratio of about 100 % in a longitudinal direction at about 25 °C and a rate of about 10 mm/min.

**Experimental Example 1 - Measurement of tensile strength, breaking elongation and modulus**

Each of the non-stretched sheet samples and stretched sheet samples of Examples 1 to 5 and Comparative Examples 1 to 3 was cut to a length of 100 mm and a width of 15 mm. Next, each of the non-stretched sheet samples and the stretched sheet samples was mounted on INSTRON's universal testing machine (4206-001, manufacturer: UTM) with a chuck spacing of 50 mm according to ASTM D 882. The sample was stretched at room temperature of 25°C at a rate of 200 mm/min, and then the tensile strength, breaking elongation and modulus thereof were measured by a program built into the universal testing machine. Results are shown in Table 3 below.

[Table 3]

| Classification | Non-stretched sheet sample | | | Stretched sheet sample | | |
|---|---|---|---|---|---|---|
| | Tensile strength | Breaking elongation | Modulus | Tensile strength | Breaking elongation | Modulus |
| Unit | $kgf/mm^2$ | % | $kgf/mm^2$ | $kgf/mm^2$ | % | $kgf/mm^2$ |
| Example 1 | 1.15 | 663 | 15.73 | 5.69 | 335 | 13.29 |
| Example 2 | 1.16 | 580 | 14.99 | 5.62 | 331 | 13.11 |
| Example 3 | 1.12 | 600 | 15.01 | 5.43 | 330 | 13.05 |
| Example 4 | 1.15 | 610 | 15.50 | 5.39 | 328 | 13.87 |

(continued)

| Classification | Non-stretched sheet sample | | | Stretched sheet sample | | |
|---|---|---|---|---|---|---|
| | Tensile strength | Breaking elongation | Modulus | Tensile strength | Breaking elongation | Modulus |
| Unit | $kgf/mm^2$ | % | $kgf/mm^2$ | $kgf/mm^2$ | % | $kgf/mm^2$ |
| Example 5 | 1.13 | 625 | 15.53 | 5.48 | 341 | 13.20 |
| Comparative Example 1 | 1.40 | 252 | 21.38 | 3.80 | 297 | 13.40 |
| Comparative Example 2 | 1.42 | 235 | 20.55 | 3.66 | 286 | 13.30 |
| Comparative Example 3 | 1.40 | 242 | 21.12 | 3.81 | 293 | 13.25 |

**Experimental Example 2 - Measurement of melt index of biodegradable resin composition**

For each of the biodegradable resin composition of Examples 1 to 5 and Comparative Examples 1 to 3, the melt index of the biodegradable resin composition passing through an orifice (length: 8 mm, radius: 2 mm) for 10 minutes was measured at each temperature of 190 °C, 230 °C, and 250 °C under a load condition of 2.16 kg according to ASTM D1238. Results are shown in Table 4 below.

**Experimental Example 3 - Processability evaluation of film**

Fracture occurrence in a film manufactured from each of the biodegradable resin compositions of Examples 1 to 5 and Comparative Examples 1 to 3 was evaluated based on the following criteria, and the results are shown in Table 4 below.
- Appropriate: No fracture occurred within about 1,000 m
- Inappropriate: Fracture occurred within about 1,000 m

[Table 4]

| Classification | Melt index | | | Processability |
|---|---|---|---|---|
| | 190 °C | 230 °C | 250 °C | |
| Unit | g/10 min | | | $kgf/mm^2$ |
| Example 1 | 2.5 | 11.0 | 17.5 | Appropriate |
| Example 2 | 2.7 | 11.2 | 18.3 | Appropriate |
| Example 3 | 2.4 | 10.7 | 17.1 | Appropriate |
| Example 4 | 2.5 | 11.1 | 17.6 | Appropriate |
| Example 5 | 3.0 | 12.3 | 19.4 | Appropriate |
| Comparative Example 1 | 0.7 | 3.5 | 9.2 | Inappropriate |
| Comparative Example 2 | 0.9 | 3.3 | 9.1 | Inappropriate |
| Comparative Example 3 | 1.0 | 4.0 | 9.4 | Inappropriate |

As shown in Tables 1 to 4, it was confirmed that Examples 1 to 5 in which the surface of the inorganic filler was treated with a surface treatment agent, and a fluidity enhancer containing a phthalic acid ester-based compound was used as the surface treatment agent exhibited excellent processability and improvements in mechanical properties such as flexibility and elongation, compared to Comparative Examples 1 to 3.

[Industrial Applicability]

Embodiments can be applied to a method of preparing a biodegradable resin composition, a biodegradable resin composition prepared by the method, and a biodegradable molded article including the biodegradable resin composition.

## Claims

1. A method of preparing a biodegradable resin composition, the method comprising:

   surface-treating an inorganic filler with a surface treatment agent; and
   mixing the surface-treated inorganic filler with a biodegradable resin,
   wherein the surface treatment agent comprises a fluidity enhancer,
   wherein the fluidity enhancer comprises a phthalic acid ester-based compound.

2. The method according to claim 1, wherein the phthalic acid ester-based compound may be represented by Chemical Formula 1 below:

[Chemical Formula 1]

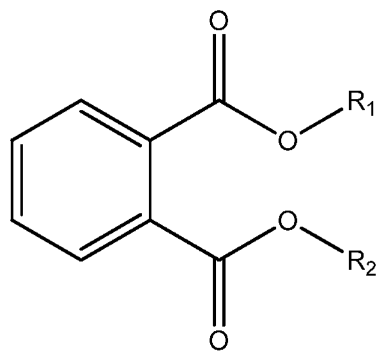

In Chemical Formula 1, $R_1$ and $R_2$ are each independently an alkyl group having 4 to 10 carbon atoms.

3. The method according to claim 1, wherein the surface treatment agent further comprises an organic fatty acid.

4. The method according to claim 3, wherein the organic fatty acid comprises stearic acid.

5. The method according to claim 1, wherein the surface-treating comprises:

   heat-treating the inorganic filler; and
   mixing the heat-treated inorganic filler with the surface treatment agent.

6. The method according to claim 5, wherein the heat-treating of the inorganic filler, the heat treatment may be performed at 250 °C to 700°C for 5 minutes to 30 minutes.

7. The method according to claim 1, wherein the surface-treating of the inorganic filler, the content of the fluidity enhancer may be greater than 0 part by weight and 1 part by weight or less based on 100 parts by weight of the inorganic filler.

8. The method according to claim 1, wherein the surface-treating of the inorganic filler, the content of the surface treatment agent may be 0.5 parts by weight or more and 5 parts by weight or less based on 100 parts by weight of the inorganic filler.

9. A biodegradable resin composition, comprising:

   a biodegradable resin;
   an inorganic filler; and
   a fluidity enhancer,
   wherein the fluidity enhancer comprises a phthalic acid ester-based compound.

10. The biodegradable resin composition according to claim 9, wherein the biodegradable resin composition further comprises an organic fatty acid.

**11.** The biodegradable resin composition according to claim 9, wherein a content of the fluidity enhancer is greater than 0 wt % and 1 wt% or less based on a total weight of the biodegradable resin composition.

**12.** The biodegradable resin composition according to claim 9, wherein an inorganic content-weighted elongation at break exceeds 100 %,
wherein the inorganic content-weighted elongation at break is obtained by multiplying a breaking elongation measured by Measurement Method 1 below by wt % of the inorganic filler based on a total weight of the biodegradable resin composition:
[Measurement Method 1]

1) The biodegradable resin composition is placed between a pair of flat stainless steel molds, compressed at 180°C under a pressure of 20 MPa, and molded, so that a biodegradable resin composition sheet having a thickness of 900 $\mu$m is manufactured.
2) The biodegradable resin composition sheet is cut to produce a sample having a rectangular planar shape with a width of 15 mm.
3) According to ASTM D882, a breaking elongation of a 50 mm part in length of the sample is measured.

**13.** The biodegradable resin composition according to claim 9, wherein a tensile strength of a 50 mm part in length of the sample is 0.7 $kgf/mm^2$ to 2 $kgf/mm^2$.

**14.** The biodegradable resin composition according to claim 13, wherein an inorganic content-weighted tensile strength is 0.3 $kgf/mm^2$ to 1.2 $kgf/mm^2$,
wherein the inorganic content-weighted tensile strength is obtained by multiplying the tensile strength by wt % of the inorganic filler based on a total weight of the biodegradable resin composition.

**15.** The biodegradable resin composition according to claim 9, wherein an inorganic content-weighted melt index is 0.05 g/10 min to 5 g/10 min,

wherein the melt index is measured from the biodegradable resin composition at 190°C under a load of 2.16 kg according to ASTM D1238, and
the inorganic content-weighted melt index is obtained by multiplying the melt index by multiplying wt % of the inorganic filler based on a total weight of the biodegradable resin composition.

**16.** The biodegradable resin composition according to claim 9, wherein the biodegradable resin composition has a wet hardness reduction rate of 15 % or less measured by Measurement Method 2 below:
[Measurement Method 2]

1) A polyester block with a thickness of 2.5 mm is manufactured using the biodegradable resin composition.
2) An initial hardness of the polyester block, and a wet hardness of the polyester block after immersing in water at 30°C for 24 hours are measured.
3) The wet hardness reduction rate is obtained by dividing a difference between the initial hardness and the wet hardness by the initial hardness.

**17.** The biodegradable resin composition according to claim 9, wherein the biodegradable resin composition comprises an oligomer having a number average molecular weight of 400 g/mol to 1,300 g/mol, wherein a content of the oligomer is 1,000 ppm to 20,000 ppm based on a total weight of the biodegradable resin composition.

**18.** A biodegradable resin composition, comprising:

a biodegradable resin;
an inorganic filler; and
a fluidity enhancer,
wherein the fluidity enhancer comprises a phthalic acid ester-based compound.

**19.** The biodegradable molded article according to claim 18, wherein the biodegradable molded article is a nonwoven fabric, a vacuum-formed sheet, a blown molded article, or an injection-molded article.

【FIG. 1】

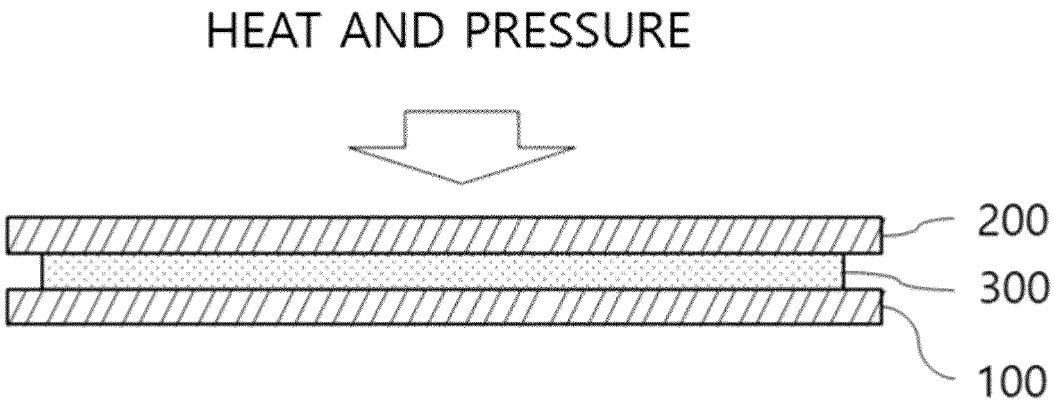


【FIG. 2】

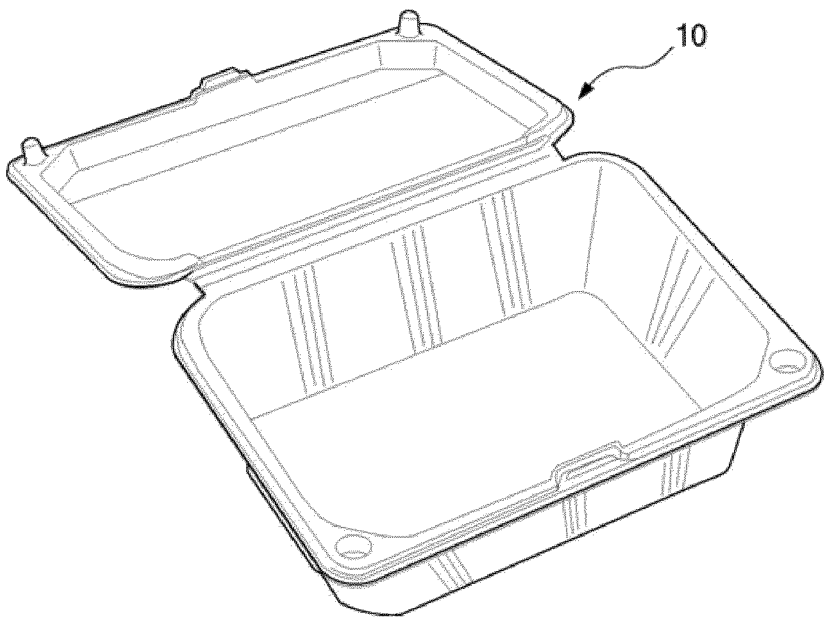

# INTERNATIONAL SEARCH REPORT

International application No.
**PCT/KR2023/010696**

## A. CLASSIFICATION OF SUBJECT MATTER

**C08K 9/04**(2006.01)i; **C08K 3/013**(2018.01)i; **C08K 5/12**(2006.01)i; **C08K 5/09**(2006.01)i; **C08L 67/02**(2006.01)i; **C08L 67/00**(2006.01)i; **C08K 3/08**(2006.01)i

According to International Patent Classification (IPC) or to both national classification and IPC

## B. FIELDS SEARCHED

Minimum documentation searched (classification system followed by classification symbols)

C08K 9/04(2006.01); C01F 11/18(2006.01); C08K 3/00(2006.01); C08K 3/20(2006.01); C08L 101/00(2006.01); C08L 3/02(2006.01); C08L 67/02(2006.01); C08L 67/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 생분해성 수지 (biodegradable resin), 표면 처리 (surface treatment), 유동성 증진제 (fluidity enhancer)

## C. DOCUMENTS CONSIDERED TO BE RELEVANT

| Category* | Citation of document, with indication, where appropriate, of the relevant passages | Relevant to claim No. |
|---|---|---|
| X | KR 10-1964941 B1 (KOREA CONFORMITY LABORATORIES) 02 April 2019 (2019-04-02) See abstract; claims 1-6; and paragraphs [0018] and [0044]. | 9,11,17-19 |
| Y | | 1-8,10,12-16 |
| Y | KR 10-2014-0033114 A (SHIRAISHI KOGYO KAISHA LTD.) 17 March 2014 (2014-03-17) See abstract; claim 1; and paragraphs [0031], [0046], [0047], [0066] and [0070]. | 1-8,10,12-16 |
| A | JP 2005-162871 A (SONY CORP.) 23 June 2005 (2005-06-23) See entire document. | 1-19 |
| A | CN 107955212 A (TIANJIN BAODI BAOHONG PLASTIC CEMENT CO., LTD.) 24 April 2018 (2018-04-24) See entire document. | 1-19 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 November 2023** | **10 November 2023** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT

International application No.
**PCT/KR2023/010696**

**C. DOCUMENTS CONSIDERED TO BE RELEVANT**

| Category* | Citation of document, with indication, where appropriate, of the relevant passages | Relevant to claim No. |
|---|---|---|
| A | CN 105802145 A (YIFAN XINFU PHARMACEUTICAL CO., LTD. et al.) 27 July 2016 (2016-07-27)<br>See entire document. | 1-19 |

Form PCT/ISA/210 (second sheet) (July 2022)

**INTERNATIONAL SEARCH REPORT**
**Information on patent family members**

International application No.
**PCT/KR2023/010696**

| Patent document cited in search report | Publication date (day/month/year) | Patent family member(s) | Publication date (day/month/year) |
| --- | --- | --- | --- |
| KR 10-1964941 B1 | 02 April 2019 | None | |
| KR 10-2014-0033114 A | 17 March 2014 | CN 103608292 A | 26 February 2014 |
| | | CN 103608292 B | 09 December 2015 |
| | | EP 2719665 A1 | 16 April 2014 |
| | | JP 5312714 B2 | 09 October 2013 |
| | | US 2014-0128529 A1 | 08 May 2014 |
| | | US 9085668 B2 | 21 July 2015 |
| | | WO 2012-173114 A1 | 20 December 2012 |
| JP 2005-162871 A | 23 June 2005 | CN 101864155 A | 20 October 2010 |
| | | CN 1914278 A | 14 February 2007 |
| | | EP 1690899 A1 | 16 August 2006 |
| | | JP 2005-162872 A | 23 June 2005 |
| | | JP 2005-162873 A | 23 June 2005 |
| | | KR 10-2006-0117961 A | 17 November 2006 |
| | | US 2007-0270527 A1 | 22 November 2007 |
| | | US 7645823 B2 | 12 January 2010 |
| | | WO 2005-054373 A1 | 16 June 2005 |
| CN 107955212 A | 24 April 2018 | None | |
| CN 105802145 A | 27 July 2016 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 9096758 B
- US 4797468 A
- US 5470944 A
- US 5770682 A
- US 5821327 A
- US 5880254 A
- US 6326458 B

### Non-patent literature cited in the description

- *J. Bacteriol.*, 1997, vol. 179, 4821